(19) **Europäisches Patentamt / European Patent Office / Office européen des brevets**

(11) **EP 2 979 080 B1**

(12) **FASCICULE DE BREVET EUROPEEN**

(45) Date de publication et mention
de la délivrance du brevet:
**08.03.2017 Bulletin 2017/10**

(21) Numéro de dépôt: **14718523.5**

(22) Date de dépôt: **25.03.2014**

(51) Int Cl.:
**G01N 21/65** [(2006.01)]

(86) Numéro de dépôt international:
**PCT/EP2014/055987**

(87) Numéro de publication internationale:
**WO 2014/154708 (02.10.2014 Gazette 2014/40)**

(54) **DISPOSITIF ET METHODE DE DETECTION RAMAN STIMULEE**

VORRICHTUNG UND VERFAHREN FÜR STIMULIERTEN RAMANNACHWEIS

DEVICE AND METHOD FOR STIMULATED RAMAN DETECTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.03.2013 FR 1300694**

(43) Date de publication de la demande:
**03.02.2016 Bulletin 2016/05**

(73) Titulaires:
• **Université d'Aix Marseille
13284 Marseille Cedex 07 (FR)**
• **Centre National de la Recherche Scientifique
(Etablissement Public)
75794 Paris (FR)**

(72) Inventeurs:
• **BERTO, Pascal
75010 Paris (FR)**
• **ANDRESEN, Esben
F-13005 Marseille (FR)**
• **RIGNEAULT, Hervé
F-13190 Allauch (FR)**

(74) Mandataire: **Osha Liang
2, rue de la Paix
75002 Paris (FR)**

(56) Documents cités:
**EP-A2- 2 211 219**

• **CHRISTIAN W. FREUDIGER ET AL: "Highly specific label-free molecular imaging with spectrally tailored excitation-stimulated Raman scattering (STE-SRS) microscopy", NATURE PHOTONICS, vol. 5, no. 2, 16 janvier 2011 (2011-01-16), pages 103-109, XP055091658, ISSN: 1749-4885, DOI: 10.1038/nphoton.2010.294**
• **POPOV K I ET AL: "Image formation in CARS and SRS: effect of an inhomogeneous nonresonant background medium", OPTICS LETTERS, THE OPTICAL SOCIETY, vol. 37, no. 4, 15 février 2012 (2012-02-15), pages 473-475, XP001574102, ISSN: 0146-9592, DOI: 10.1364/OL.37.000473 [extrait le 2012-06-02]**
• **SEUNG MIN JIN ET AL: "Development of Femtosecond Stimulated Raman Spectroscopy: Stimulated Raman Gain via Elimination of Cross Phase Modulation", BULLETIN OF THE KOREAN CHEMICAL SOCIETY, KOREAN CHEMICAL SOCIETY, KR, vol. 25, no. 12, 20 décembre 2004 (2004-12-20), pages 1829-1832, XP008142647, ISSN: 0253-2964**

## Description

### Domaine technique de l'invention

La présente invention concerne un dispositif et une méthode de détection d'un signal optique non linéaire résonant de type diffusion Raman stimulée (SRS) dans un échantillon. Elle s'applique notamment à l'imagerie microscopique, à la spectroscopie et à l'imagerie hyperspectrale dans les milieux diffusants tels que les milieux biologiques.

### Etat de l'art

Toutes les liaisons chimiques possèdent des fréquences de vibration qui leur sont propres. On appelle techniques optiques vibrationnelles des méthodes qui visent à utiliser l'interaction lumière/matière pour obtenir des informations sur ces vibrations moléculaires. La plus connue de ces techniques est la spectroscopie infrarouge (IR) qui observe les raies d'absorption spécifiques des liaisons chimiques présentes dans un échantillon. Découverte en 1928, la diffusion Raman (du nom du physicien Chandrasekhara Venkata Raman qui découvrit l'effet) permet d'utiliser la lumière visible pour accéder au spectre vibrationnel des molécules qui interagissent avec un faisceau lumineux. Dans un processus de diffusion Raman, une onde pompe de pulsation $\omega_P$ incidente sur une molécule est diffusée inélastiquement en une onde dite Stokes de pulsation $\omega_S$ et une onde dite anti-Stokes de pulsation $\omega_{AS}$. L'écart en fréquence entre les ondes générées et l'onde pompe dépend de la transition Raman moléculaire (de pulsation $\Omega_R$) de telle sorte que $\omega_P-\omega_S=\omega_{AS}-\omega_P=\Omega_R$. Dans une vision photonique du processus, les ondes Stokes et anti-Stokes correspondent à une absorption à partir respectivement du niveau vibrationnel fondamental ou excité. Le processus générant l'onde anti-Stokes, partant du niveau vibrationnel excité, est beaucoup moins probable que le processus créant l'onde Stokes, qui est la seule observée dans la pratique en spectroscopie Raman spontanée. Une étude fine de la répartition spectrale des ondes Stokes renseigne sur les densités de liaisons chimiques présentes dans l'échantillon. Ce processus spontané de diffusion inélastique est très peu efficace comparé à la fluorescence (les sections efficaces Raman sont de l'ordre de $10^{-30}$ cm$^2$/molécule, à comparer avec la section efficace d'absorption à 1 photon d'un fluorophore qui atteint $10^{-16}$ cm$^2$/molécule).

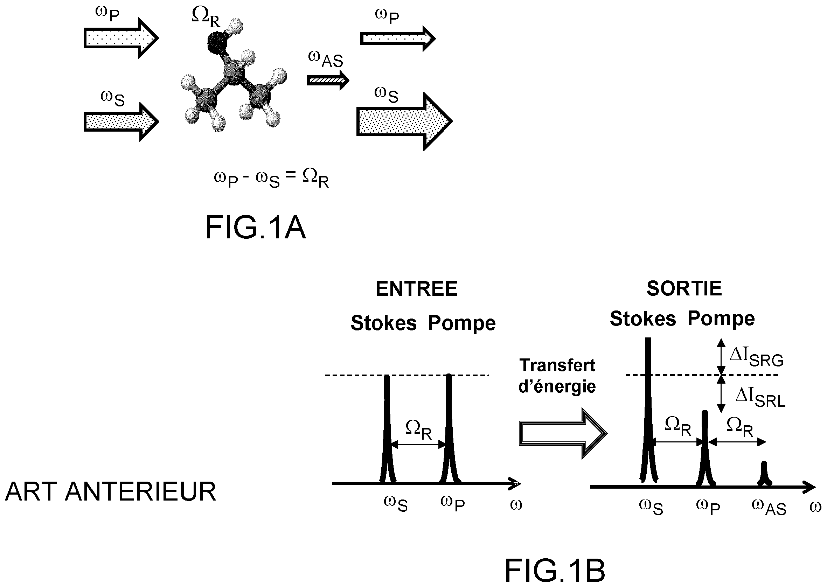

Les techniques Raman stimulées CARS (pour Coherent Anti-Stokes Raman Scattering) et SRS (pour Stimulated Raman Scattering) sont des processus de diffusion Raman cohérente qui offrent par rapport aux processus de diffusion Raman spontanée un gain d'environ $10^7$. Dans ces techniques (voir Figure 1A), deux impulsions laser de pulsations $\omega_p$ et $\omega_s$ (ou de fréquences $\nu_p$ et $\nu_s$) dont la différence de pulsations est rendue égale à la pulsation $\Omega_R$ du niveau vibrationnel que l'on veut adresser sont envoyées dans le milieu à analyser. Ces impulsions, dénotées respectivement pompe et Stokes, créent un battement de fréquence qui permet de faire entrer en résonance le mode vibrationnel de pulsation $\Omega_R$. Dans le processus CARS, cette résonance est sondée par le faisceau pompe qui induit de la diffusion anti-Stokes à la pulsation $\omega_{AS}$. La diffusion Raman stimulée (SRS) est un processus qui résulte de l'exaltation de la réponse non linéaire due à l'interaction du champ non linéaire induit par les champs pompe et stokes avec le champ excitateur (pompe) et s'observe donc, contrairement au processus CARS, aux mêmes fréquences que les impulsions pompe et Stokes. Il se traduit par un transfert d'énergie du faisceau pompe vers le faisceau Stokes. Ainsi, la diffusion Raman stimulée couvre deux processus, le processus SRL (pour Stimulated Raman Loss) et le processus SRG (pour Stimulated Raman Gain) qui induisent respectivement une perte d'intensité $\Delta I_{SRL}$ sur le faisceau pompe et un gain d'intensité $\Delta I_{SRG}$ sur le faisceau Stokes (voir Figure 1B). Le processus SRS est décrit par exemple dans l'article de revue de N. Bloembergen (« The stimulated raman effect », American Journal of Physics, 35:989-1023, 1967). On montre que la déplétion en intensité $\Delta I_{SRL}$ du faisceau pompe et le gain en intensité $\Delta I_{SRG}$ du faisceau Stokes sont proportionnels à la partie imaginaire de la susceptibilité non linéaire d'ordre 3 ($Im(\chi_R^{(3)})$). La mesure de ces quantités permet donc de remonter rigoureusement au spectre Raman. Récemment, les techniques optiques vibrationnelles se sont davantage concentrées sur les techniques SRS qui, contrairement aux techniques CARS, ne sont pas sujet à un fond non résonant toujours présent dans CARS et sont linéaires avec la concentration des espèces chimiques.

La microscopie SRS est une technique nouvelle qui a tiré profit des récentes avancées dans le domaine de la spectroscopie SRS en régime femtoseconde. En 2007, Ploetz et al. (« Femtosecond Stimulated Raman Microscopy", Applied Physics B, 87(3):389-393, 2007) développèrent le premier microscope SRS basé sur un système laser amplifié délivrant des impulsions femtoseconde et picoseconde. Ce type de système induit un fort signal SRS mais n'est cependant pas adapté à l'imagerie biologique. En effet, les fortes puissances crêtes mises en jeu (de l'ordre du nJ) endommagent les échantillons, et les faibles taux de répétition (1 KHz) sont incompatibles avec la microscopie à balayage rapide.

Il a alors été proposé (voir par exemple les articles de C.W. Freudiger et al. : « Label-free biomedical imaging with high sensitivity by stimulated Raman scattering microscopy", Science, 322(5909):1857-1861, 2008, P. Nandakumar et al. : "Vibrational imaging based on stimulated raman scattering microscopy", New Journal of Physics, 11(3):033026 (9pp), 2009, Y. Ozeki et al. : "Analysis and experimental assessment of the sensitivity of stimulated Raman scattering microscopy », Optics Express, 17(5):3651-3658, mars 2009) un microscope SRS basé sur l'utilisation d'un système laser picoseconde à fort taux de répétition (80 MHz), compatible avec la formation d'images d'échantillons biologiques. En microscopie CARS, le signal utile, c'est-à-dire le signal anti-Stokes, est généré à une fréquence différente des faisceaux excitateurs. Celui-ci peut être détecté par des détecteurs extrêmement sensibles tels que des photodiodes à avalanche ou des tubes photomultiplicateurs. En microscopie SRS, la problématique de détection est différente car le signal utile est généré à la même fréquence que les faisceaux excitateurs. Il s'agit alors de détecter la perte d'énergie du faisceau pompe $\Delta I_{SRL}$ ou, indifféremment, le gain en énergie du faisceau Stokes $\Delta I_{SRG}$. En pratique, la perte d'énergie du faisceau pompe est de l'ordre de $\Delta I_{SRL}/I_P \approx 10^{-5} - 10^{-8}$. Dans les articles ci-dessus cités, il est proposé de moduler le signal Stokes à une fréquence $f_m$ et d'extraire la perte du signal de pompe à la fréquence $f_m$ par une détection synchrone pour gagner en sensibilité de détection.

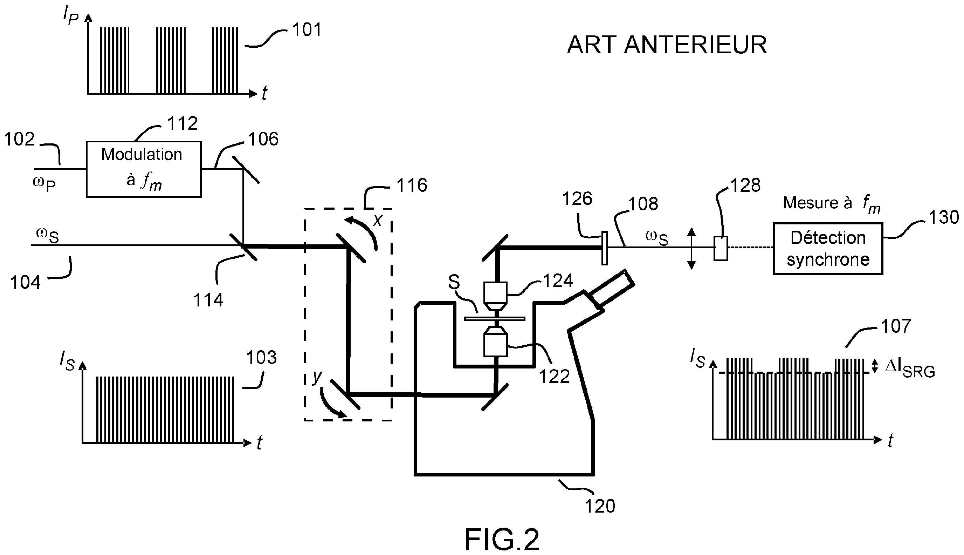

La figure 2 représente ainsi un schéma d'un microscope SRS selon l'art antérieur en configuration SRG, c'est-à-dire dans une configuration adaptée à l'extraction du gain du faisceau Stokes. Des trains d'impulsions pompe et Stokes, référencés 102, 104 sur la figure 2, respectivement aux pulsations $\omega_p$ et $\omega_S$, sont envoyées sur un échantillon S positionné au foyer d'un objectif de microscope 122 disposé dans le corps d'un microscope 120. Les pulsations $\omega_p$ et $\omega_S$ sont choisies de telle sorte que la différence des pulsations soit égale à une pulsation $\Omega_R$ du niveau vibrationnel que l'on veut adresser dans l'échantillon. Les trains d'impulsions pompe et Stokes sont superposés spatialement au moyen d'un combineur 114 et une ligne à retard ajustable (non représentée) est prévue pour assurer la superposition temporelle des impulsions dans l'échantillon. Le train d'impulsions pompe 102 est modulé en amplitude à la fréquence de modulation $f_m$ au moyen d'un dispositif de modulation 112 pour former un train d'impulsions modulé 106. Afin de réduire le bruit électronique et le bruit du laser, la fréquence de modulation est choisie supérieure à 1 MHz. Sur la figure 2, les courbes 101 et 103 représentent ainsi respectivement l'allure temporelle des intensités lumineuses $I_P$ et $I_S$ des trains d'impulsions pompe modulé 106 et Stokes 104 (non modulé). Un objectif de collection 124 permet de collecter les signaux optiques résultant de l'interaction des impulsions pompe et Stokes dans l'échantillon. Dans la configuration choisie, un filtre 126 permet de sélectionner le train d'impulsions 108 à la pulsation $\omega_S$ qui est ensuite envoyé vers un détecteur optique 128, par exemple une photodiode. L'intensité optique mesurée en fonction du temps est représentée schématiquement sur la courbe 107. Une détection synchrone 130 à la fréquence de modulation $f_m$ permet d'extraire le signal recherché $\Delta I_{SRG}$, caractéristique de la vibration moléculaire à la pulsation $\Omega_R$. Un balayage des faisceaux excitateurs 104, 106 dans l'échantillon, par exemple au moyen d'un système de balayage 116 comprenant deux miroirs galvanométriques, permet alors de faire une image de la zone d'intérêt de l'échantillon.

La microscopie SRS est cependant sujette à un certain nombre d'artefacts qui limitent la spécificité chimique car ils introduisent des signaux pouvant être interprétés comme du signal SRS. En particulier, la microscopie SRS est sensible à l'effet Kerr croisé (ou XPM pour « Cross Phase Modulation »), non spécifique des liaisons chimiques ciblées et qui apparaît comme un offset positif ou négatif sur le signal SRS. La microscopie SRS est sensible également à l'absorption à deux photons croisée (ou TPA pour « Two Photons Absorption ») qui apparait comme un offset positif (en configuration SRL) ou négatif (en configuration SRG) sur le signal SRS.

L'absorption à deux photons croisée est un processus non linéaire instantané qui induit (en configuration SRG telle que représentée sur la figure 2) une déplétion du faisceau Stokes uniquement lorsque le faisceau pompe est présent. Les modulations induites sur le faisceau Stokes sont ainsi détectées et interprétées comme du signal SRS. Dans un mode de détection SRG, la déplétion du faisceau Stokes par TPA apparait comme un offset négatif vis à vis de la mesure de gain SRG. Dans un mode de détection SRL, la déplétion du faisceau pompe par TPA apparait comme un offset positif vis-à-vis de la mesure de perte SRL.

L'effet Kerr optique est un processus non linéaire (instantané) qui induit une variation de l'indice de réfraction proportionnelle à l'intensité de l'onde qui la génère et se traduit par un effet de lentille provoquant la focalisation ou la défocalisation du faisceau qui la génère. En microscopie SRS, l'effet Kerr mettant enjeu uniquement des photons pompe ou uniquement des photons Stokes n'est pas gênant. En effet, en configuration SRG par exemple (telle qu'elle est représentée sur la figure 2), l'effet Kerr mettant enjeu uniquement des photons pompe induit une variation qui n'est perçue que par le faisceau pompe; or ce dernier n'est pas détecté, donc sa focalisation n'influence pas la mesure. L'effet Kerr mettant en jeu uniquement des photons Stokes induit une variation qui n'est perçue que par le faisceau Stokes; celui-ci n'étant pas modulé, la focalisation et la variation d'énergie induite sur le détecteur sont constantes dans le temps et n'influencent donc pas la mesure SRS à la fréquence de modulation $f_m$. Par contre, en configuration SRG par exemple, on observe une variation de l'indice de réfraction à la pulsation du faisceau Stokes $\omega_s$ induite par le faisceau pompe de pulsation $\omega_p$ ; c'est l'effet Kerr croisé, qui provoque dans ce cas la focalisation ou la défocalisation du faisceau Stokes avec la même modulation que celle du signal SRS mesuré. Il en résulte un offset de mesure. Afin de réduire l'influence de l'effet Kerr croisé, il est important de ne pas introduire de diaphragme lors de la collection du faisceau de mesure (pompe en SRL, Stokes en SRG) après son interaction avec l'échantillon. Pour cela, il est connu d'utiliser un objectif de collection dont l'ouverture numérique est plus grande que celle de l'objectif d'excitation.

Mis en oeuvre dans les milieux diffusants, notamment les tissus biologiques, ces artefacts sont exaltés et grèvent l'utilisation de la microscopie SRS pour suivre des liaisons vibrationnelles ayant des sections efficaces Raman faibles. En effet, même dans le cas de l'utilisation d'un objectif de collection ayant une ouverture numérique supérieure à celui de l'objectif d'excitation, la diffusion va entraîner une diaphragmation par l'objectif de collection qui va exacerber l'influence des artefacts, notamment l'effet Kerr croisé.

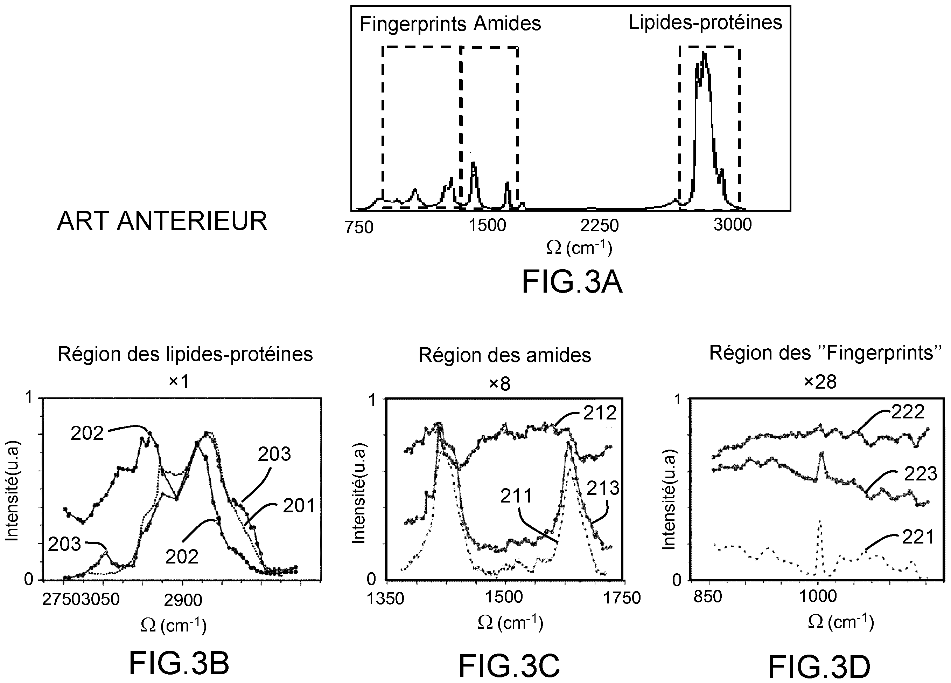

Les figures 3B à 3D illustrent ainsi des spectres obtenus par micro-spectroscopie CARS, SRS et Raman dans différentes régions spectrales, dans un tissu formé de peau humaine dont le spectre Raman est représenté sur la figure 3A. Le spectre représenté sur la figure 3A, extrait de l'article de Huang et al. (Optics Express, 19, 23 (2011)) met en évidence trois régions spectrales d'intérêt pour l'imagerie Raman. Une région dite des « lipides et protéines » correspondant à des pulsations entre 2750 $cm^{-1}$ et 3050 $cm^{-1}$ et présentant des vibrations moléculaires de forte intensité, une région dite des « amides » correspondant à des pulsations entre 1350 $cm^{-1}$ et 1750 $cm^{-1}$ et une région dite des « fingerprints » correspondant à des pulsations entre 850 $cm^{-1}$ et 1150 $cm^{-1}$. Les figures 3B à 3D représentent respectivement des mesures de spectres effectuées par micro-spectroscopie CARS, SRS et Raman dans chacune de ces régions. Dans les régions où l'intensité des vibrations moléculaires est forte (figure 3B), on vérifie une bonne adéquation de la mesure SRS 203 avec le spectre Raman 201, alors que la mesure CARS 202 présente un offset lié au fond continu non résonant. L'effet du fond continu non résonant sur la mesure CARS est également visible dans les deux autres régions (courbes 212 et 222 des figures 3C et 3D). On observe par ailleurs l'apparition d'un offset (fond continu) sur la mesure SRS dans les régions dans lesquelles l'intensité des vibrations moléculaires est plus faible. Ainsi, les courbes résultant des mesures SRS (213 et 223 sur les figures 3C et 3D) ne se superposent plus avec les spectres Raman (211 et 221). Ces courbes expérimentales illustrent l'influence des artefacts en mesure SRS notamment dans les régions où l'intensité des vibrations moléculaires est faible.

La demande de brevet EP2211219 divulgue la détection d'un signal de Diffusion Raman Stimulée, dans laquelle l'échantillon est illuminé à phases alternes par des trains d'impulsions qui excitent, respectivement, une molécule cible est une molécule interférente. Le signal de la molécule interférente peut ainsi être éliminé par soustraction.

La présente invention propose une méthode originale de détection d'un signal optique non linéaire résonant de type SRS induit dans un échantillon, qui permette d'augmenter le signal utile SRS recherché et supprimer les artefacts, notamment celui résultant de l'effet Kerr croisé, y compris dans les échantillons formés de milieux biologiques diffusants.

## RESUME DE L'INVENTION

Selon un premier aspect, l'invention concerne un dispositif pour détecter un signal optique non linéaire résonant de type Diffusion Raman Stimulée (SRS) induit dans un échantillon. Le dispositif comprend :

- des moyens électro-optiques pour faire interagir dans l'échantillon, à une première fréquence de modulation, des trains d'impulsions lumineuses de pulsations $\omega_1$ et $\omega_2$ et, à une deuxième fréquence de modulation, des trains d'impulsions lumineuses de pulsations $\omega_2$ et $\omega_3$, telles que $\omega_2 - \omega_1 = \omega_3 - \omega_2 = \Omega_R$ où $\Omega_R$ est une pulsation (ou fréquence angulaire) de résonance vibrationnelle moléculaire de l'échantillon,
- des moyens de détection synchrone aux première et deuxième fréquences de modulation de signaux optiques non linéaires résultant de l'interaction des impulsions lumineuses dans l'échantillon,
- des moyens de traitement électronique permettant à partir de signaux électroniques résultant de la détection synchrone d'obtenir un signal caractéristique de la résonance vibrationnelle moléculaire de l'échantillon.

Ce nouveau dispositif met ainsi en oeuvre trois faisceaux excitateurs, à trois longueurs d'onde prédéterminées, dont les interactions deux à deux dans l'échantillon aux première et deuxième fréquences de modulation permettent de générer à la fois un processus SRL et un processus SRG, le faisceau de longueur d'onde intermédiaire servant alternativement de faisceau pompe ou de faisceau Stokes dans chacun des processus. Les fréquences de modulation peuvent être identiques ou distinctes selon des variantes de réalisation. Dans les deux cas, une détection synchrone à la ou les fréquence(s) de modulation sur les signaux optiques non linéaires résultant des interactions dans les deux processus permet de s'affranchir des artefacts et de multiplier par deux le signal utile SRS.

Les moyens pour faire interagir dans l'échantillon les trains d'impulsions comprennent avantageusement des moyens de focalisation des trains d'impulsion dans un volume de focalisation commun, permettant d'obtenir des densités d'énergie suffisantes dans l'échantillon pour générer les effets optiques non linéaires.

Le dispositif décrit peut être au moins partiellement fibré. La déposante a montré que la méthode de détection mise en oeuvre permettait en outre de s'affranchir des artefacts dus aux effets non linéaires générés dans la fibre.

Une application d'un tel dispositif est l'imagerie vibrationnelle Raman, et notamment l'imagerie microscopique. Le dispositif peut comprendre alors des moyens de déplacement relatif de ce volume de focalisation dans l'échantillon pour procéder à l'imagerie.

Une autre application du dispositif décrit est la spectroscopie Raman. Le dispositif peut comprendre par exemple des moyens de variation des pulsations $\omega_1$ et $\omega_3$ des trains d'impulsions qui interagissent dans l'échantillon, permettant de faire varier la pulsation de résonance vibrationnelle moléculaire $\Omega_R$ de l'échantillon que l'on cherche à étudier.

Une application du dispositif décrit est l'imagerie hyperspectrale Raman, permettant de réaliser des images SRS de l'échantillon à différentes pulsations de résonance vibrationnelle moléculaire $\Omega$.

En imagerie ou en spectroscopie, les moyens de détection synchrone comprennent des moyens de détection optiques des signaux optiques non linéaires résultant de l'interaction des trains d'impulsion dans l'échantillon, la détection optique pouvant se faire dans un mode de détection avant (ou « forward »), dans un mode de détection arrière (ou « epi ») ou dans un mode de détection endoscopique, notamment pour l'étude des vibrations moléculaires dans des couches profondes d'un échantillon biologique.

Selon une première variante du dispositif décrit, une modulation en amplitude est réalisée sur au moins un des trains d'impulsions.

Dans un premier exemple de réalisation, les moyens électro-optiques comprennent une source d'émission de trains d'impulsions aux pulsations $\omega_1$, $\omega_2$ et $\omega_3$, et des moyens pour moduler en amplitude les trains d'impulsions aux pulsations $\omega_1$ et $\omega_3$ respectivement aux première et deuxième fréquences de modulation.

Par exemple, les trains d'impulsions aux pulsations $\omega_1$ et $\omega_3$ sont modulés en amplitude à la même fréquence de modulation mais en opposition de phase. Dans ce cas, les trains d'impulsions lumineuses de pulsations $\omega_1$ et $\omega_2$ d'une part, et les trains d'impulsions lumineuses de pulsations $\omega_2$ et $\omega_3$ d'autre part, interagissent dans l'échantillon de façon alternée à la fréquence de modulation. Les moyens de détection synchrone comprennent par exemple un détecteur optique des impulsions issues de l'échantillon à la pulsation $\omega_2$ et une détection synchrone, analogique ou numérique, du signal électrique issu du détecteur optique à la fréquence de modulation. Le signal issu de la détection synchrone est caractéristique de la résonance vibrationnelle moléculaire de l'échantillon. Les moyens de traitement électroniques permettent d'extraire ce signal pour son exploitation.

Alternativement, les trains d'impulsions aux pulsations $\omega_1$ et $\omega_3$ sont modulés en amplitude à deux fréquences de modulations distinctes, non multiples l'une de l'autre. Dans ce cas, une détection synchrone des impulsions issues de l'échantillon à la pulsation $\omega_2$ est effectuée à chacune des fréquences de modulation. Les signaux issus de la détection synchrone sont traités pour extraire le signal caractéristique de la résonance vibrationnelle moléculaire de l'échantillon.

Dans un deuxième exemple de réalisation, les première et deuxième fréquences de modulation sont identiques, et les moyens électro-optiques comprennent une source d'émission de trains d'impulsions aux pulsations $\omega_1$, $\omega_2$ et $\omega_3$, et des moyens pour moduler en amplitude le train d'impulsions à la pulsation $\omega_2$ à la fréquence de modulation. Dans ce cas, une détection synchrone à la fréquence de modulation est effectuée pour les impulsions issues de l'échantillon à la pulsation $\omega_1$ d'une part et les impulsions issues de l'échantillon à la pulsation $\omega_3$ d'autre part. Les signaux issus de chacune des détections synchrones sont traités pour extraire le signal caractéristique de la résonance vibrationnelle moléculaire de l'échantillon.

Selon une deuxième variante du dispositif décrit, une ligne à retard est introduite sur le trajet d'au moins un des trains d'impulsions et une modulation du retard temporel entre les trains d'impulsions est réalisée.

Plus précisément, les première et deuxième fréquences de modulation étant identiques, les moyens électro-optiques peuvent comprendre une source d'émission de trains d'impulsions aux pulsations $\omega_1$, $\omega_2$ et $\omega_3$ et au moins une ligne à retard permettant de générer entre les trains d'impulsions aux pulsations $\omega_1$ et $\omega_3$ et les trains d'impulsions à la pulsation $\omega_2$, un retard temporel modulé à la fréquence de modulation. Dans ce cas, comme dans le cas de trains d'impulsions modulés en amplitude en opposition de phase, des trains d'impulsions lumineuses de pulsations $\omega_1$ et $\omega_2$ d'une part, et des trains d'impulsions lumineuses de pulsations $\omega_2$ et $\omega_3$ d'autre part, interagissent dans l'échantillon de façon alternée à la fréquence de modulation.

Que ce soit dans la première variante (modulation d'amplitude) ou dans la deuxième variante (modulation du retard temporel), les impulsions peuvent être par exemple des impulsions picosecondes fines spectralement de pulsations centrées sur les pulsations $\omega_1$ et $\omega_2$ et $\omega_3$, ou selon une variante des impulsions à dérive de fréquence (« chirpées ») de pulsations centrées sur les pulsations $\omega_1$ et $\omega_2$ et $\omega_3$.

Dans le cas d'impulsions picosecondes, les trains d'impulsions sont par exemple émis par une source laser picoseconde comprenant un laser maître émettant les trains d'impulsions de pulsation $\omega_2$ et un laser OPO émettant les trains d'impulsions de pulsations $\omega_1$ (Idler) et $\omega_3$ (Signal).

Dans le cas d'impulsions à dérive de fréquence, les trains d'impulsions sont par exemple obtenus par une source laser femtoseconde comprenant un laser maître et un OPO, les impulsions étant étendues par un étireur temporel.

Dans le cas d'impulsions à dérive de fréquence, la source d'émission peut comprendre en outre une ligne à retard permettant de générer un décalage temporel identique entre les impulsions aux pulsations $\omega_1$ et $\omega_2$ d'une part et les impulsions aux pulsations $\omega_2$ et $\omega_3$ d'autre part, la variation du décalage temporel permettant de sonder les fréquences de résonance vibrationnelle moléculaire de l'échantillon.

Dans la deuxième variante du dispositif décrit (modulation du retard temporel), la source d'émission peut comprendre un générateur de trains d'impulsions à dérive de fréquence centrées sur la pulsation $\omega_2$, une lame séparatrice dichroïque permettant de séparer d'une part les impulsions centrées sur la pulsation $\omega_2$ et d'autre part les impulsions centrées respectivement sur les pulsations $\omega_1$ et $\omega_3$. Un retard temporel modulé à la fréquence de modulation peut alors être introduit, comme précédemment décrit, entre les trains d'impulsions aux pulsations $\omega_1$ et $\omega_3$ et les trains d'impulsions à la pulsation $\omega_2$.

Selon un deuxième aspect, l'invention concerne un procédé pour la détection d'un signal optique non linéaire résonant de type Diffusion Raman Stimulée (SRS) induit dans un échantillon mis en oeuvre par le dispositif décrit selon le premier aspect et l'ensemble de ses variantes ou exemples de réalisation.

## BREVE DESCRIPTION DES DESSINS

D'autres avantages et caractéristiques de l'invention apparaîtront à la lecture de la description, illustrée par les figures suivantes :

Figures 1A et 1B (déjà décrites), principe de la Diffusion Raman Stimulée (SRS);

Figure 2 (déjà décrite), schéma d'un microscope SRS selon l'art antérieur ;

Figures 3A à 3D (déjà décrites), exemple de spectre Raman d'un échantillon de tissu humain (peau) et mesures comparatives de spectres obtenus par micro spectroscopie CARS, SRS et Raman selon l'art antérieur, dans trois régions spectrales d'intérêt;

Figure 4, exemple de réalisation d'un dispositif de détection SRS selon un premier exemple d'une première variante de la présente invention (modulation d'amplitude);

Figures 5A à 5C, une illustration schématique des interactions dans l'échantillon, selon la première variante;

Figure 6, un tableau illustrant les signaux détectés (signaux SRS et artefacts) dans l'exemple de mise en oeuvre du dispositif décrit sur la figure 4 ;

Figures 7A à 7D, des schémas illustrant des variantes du dispositif décrit sur la figure 4, respectivement dans des modes de détection avant, arrière, avant fibré et selon un mode de détection endoscopique.

Figures 8A à 8C, des schémas montrant des premiers résultats expérimentaux obtenus avec un échantillon non diffusant, en utilisant un dispositif tel que représenté sur la figure 4 ;

Figures 9A à 8F, des schémas montrant des deuxièmes résultats expérimentaux obtenus avec un échantillon diffusant, en utilisant un dispositif tel que représenté sur la figure 4 ;

Figures 10A à 10C, des schémas montrant des troisièmes résultats expérimentaux obtenus avec un échantillon formé d'un tissu biologique, en utilisant un dispositif tel que représenté sur la figure 4 ;

Figures 11A et 11B, deux autres exemples de dispositif illustrant des variantes de la présente invention;

Figures 12A et 12B, des tableaux illustrant les signaux détectés (signaux SRS et artefacts) dans les exemples de mise en oeuvre des dispositifs décrits respectivement sur les figures 11A et 11B;

Figure 13, un exemple de réalisation d'un dispositif de détection SRS selon une autre variante de la présente invention (modulation du retard temporel);

Figures 14A à 14C, une illustration schématique des interactions dans l'échantillon, selon la variante décrite sur la figure 13;

Figure 15, un tableau illustrant les signaux détectés (signaux SRS et artefacts) dans l'exemple de la mise en oeuvre du dispositif décrit sur la figure 13 ;

Figures 16A, 16B, des schémas illustrant un exemple de réalisation d'une source de trains d'impulsions étendues spectralement ;

Figures 17A à 17C, une illustration schématique des interactions dans l'échantillon, selon une première variante (modulation d'amplitude), avec des impulsions étendues spectralement ;

Figures 18A à 18C, une illustration schématique des interactions dans l'échantillon, selon une deuxième variante (modulation du retard temporel), avec des impulsions étendues spectralement ;

Figures 19A à 19C, une illustration schématique des interactions dans l'échantillon, selon la deuxième variante (modulation du retard temporel), avec des impulsions étendues spectralement et une variation du retard temporel ;

Figure 20, un autre exemple de réalisation d'un dispositif de détection SRS selon une variante de la présente invention (modulation du retard temporel) et avec des impulsions étendues spectralement;

Figures 21A à 21C, une illustration schématique des interactions dans l'échantillon, dans l'exemple de la figure 20.

## DESCRIPTION DETAILLEE

Dans les figures, les éléments identiques sont indiqués par les mêmes références.

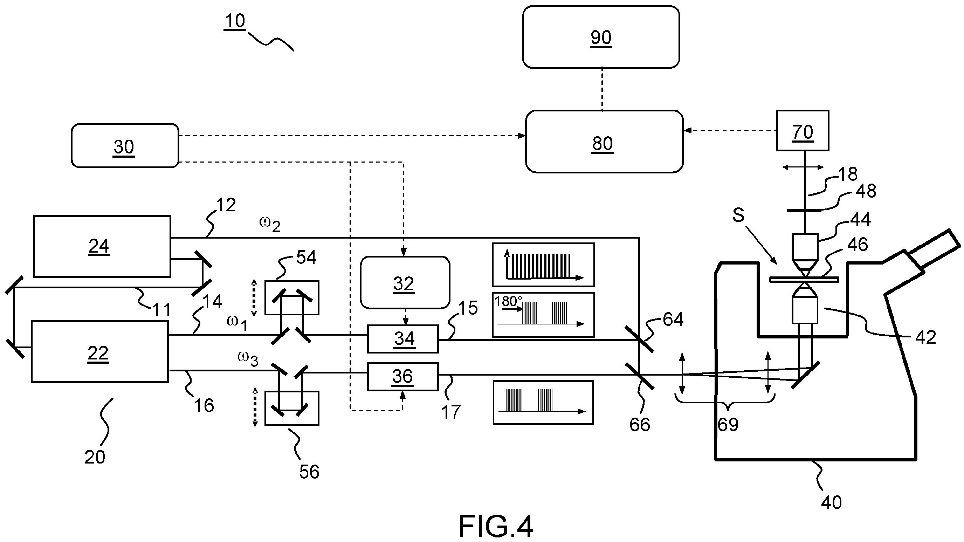

La figure 4 représente un exemple d'un dispositif de détection d'un signal optique non linéaire résonant SRS selon une variante de la présente invention, mettant en oeuvre une modulation d'amplitude.

Le dispositif de détection 10 comprend une source d'émission 20 de trains d'impulsions centrées sur les pulsations $\omega_1$, $\omega_2$ et $\omega_3$, telles que $\omega_2 - \omega_1 = \omega_3 - \omega_2 = \Omega_R$ où $\Omega_R$ est une fréquence de résonance vibrationnelle moléculaire que l'on cherche à analyser dans un échantillon S. Les impulsions sont par exemple des impulsions picosecondes, de finesse spectrale de quelques $cm^{-1}$, ou peuvent être des impulsions à dérive de fréquence comme cela sera décrit plus en détails par la suite. Typiquement, les trains d'impulsions comprennent par exemple des impulsions de quelques picosecondes, émises à des cadences de quelques dizaines de MHz, par exemple autour de 80 MHz, pendant une durée de l'ordre de la microseconde.

Selon une variante, la source d'émission 20 comprend un système laser constitué d'un laser maître 24 émettant des trains d'impulsions 12 à la pulsation $\omega_2$ est d'un laser OPO (ou Oscillateur Paramétrique Optique) 22 recevant du laser maître des impulsions 11 doublées en fréquence et adaptées à la génération paramétrique du Signal et de l'Idler au sein de l'OPO. Il en résulte des trains d'impulsions 14 et 16 aux pulsations $\omega_1$ et $\omega_3$ accordables, correspondant respectivement à l'Idler et au Signal. Le faisceau « Laser » 12 directement émis par le laser maître 24 et les faisceaux « Idler » 14 et « Signal » 16 émis par le laser OPO 22 pourront être directement exploitées pour l'imagerie SRS selon la présente description ; en effet, le mécanisme de génération paramétrique de l'OPO est tel que les pulsations des impulsions Laser ($\omega_2$), Signal ($\omega_3$) et Idler ($\omega_1$) respectent la condition $\omega_2 - \omega_1 = \omega_3 - \omega_2 = \Omega$, où $\Omega$ peut être choisi à la pulsation $\Omega_R$ d'intérêt en jouant sur le réglage de l'OPO. Ainsi, la longueur d'onde des impulsions 12 étant d'environ 1064 nm, la longueur d'onde des impulsions 13 doublées en fréquence est d'environ 532 nm, et les longueurs d'onde des impulsions Idler et Signal sont respectivement accordables entre environ 1150 à 2450 nm et environ 690 à 990 nm. Lorsque les trois trains d'impulsions 14, 12, 16 aux pulsations $\omega_1$, $\omega_2$ et $\omega_3$ interagissent dans l'échantillon, le faisceau Signal joue le rôle de pompe dans l'interaction des impulsions Laser/Signal tandis que le faisceau Laser joue le rôle de Stokes, et le faisceau Idler joue le rôle de Stokes dans l'interaction des impulsions Laser/Idler tandis que le faisceau Laser joue le rôle de pompe.

Dans l'exemple de la figure 4, sur chacune des voies Signal et Idler, une ligne à retard (respectivement 56 et 54) permet de synchroniser temporellement les trois trains d'impulsions pour en assurer le recouvrement temporel dans l'échantillon.

Dans l'exemple de la figure 4, une modulation en amplitude est réalisée sur chacun des trains d'impulsions Signal et Idler, à la même fréquence de modulation mais en opposition de phase, permettant de faire interagir dans l'échantillon alternativement les trains d'impulsions lumineuses de pulsations $\omega_1$ et $\omega_2$ et les trains d'impulsions lumineuses de pulsations $\omega_2$ et $\omega_3$, à la fréquence de modulation. Autrement dit, pendant une période de temps T donnée seules les impulsions aux pulsations $\omega_1$ et $\omega_2$ interagissent et pendant la période de temps suivante, seules les impulsions aux pulsations $\omega_2$ et $\omega_3$ interagissent, la période T étant donnée par l'inverse de la fréquence de modulation. Les trains d'impulsions Signal et Idler sont par exemple tout deux modulés par un modulateur acousto-optique (respectivement 36, 34). Le signal de modulation du modulateur acousto-optique 36 d'une fréquence $f_1$, avantageusement supérieure à 1 MHz, typiquement entre 1 et 40 MHz, est délivré par un générateur basse fréquence 30. Le signal de modulation du modulateur acousto-optique 34 de même fréquence $f_1$ provient de la même source mais est décalé en phase au moyen d'un générateur de délai électronique 32 afin que les trains d'impulsions Signal et Idler soient modulés en opposition de phase.

Les trains d'impulsions modulés en opposition de phase 15 et 17 (respectivement aux pulsations $\omega_1$ et $\omega_3$) sont combinés avec le train d'impulsions Laser à la pulsation $\omega_2$ au moyen par exemple de miroirs dichroïques 64, 66 puis focalisés dans un volume de focalisation commun dans l'échantillon S au moyen d'un objectif de microscope 42, par exemple un objectif de microscope d'ouverture numérique ON = 0.45, achromatique dans le domaine proche infrarouge (700-1300~nm). Un objectif 44 de plus grande ouverture numérique, par exemple ON=0.60 permet de collecter les trains d'impulsions issus de l'échantillon sans les diaphragmer. Le train d'impulsions 18 à la pulsation $\omega_2$ issu de l'échantillon est alors filtré par un filtre optique interférentiel 48 puis détecté par exemple par une photodiode 70 sensible à 1064 nm. Le signal de modulation est ensuite détecté par une détection synchrone 80 et le signal issu de la détection synchrone mis en forme par des moyens de traitement 90. Les moyens de détection synchrone peuvent par exemple comprendre une détection synchrone analogique à la fréquence de modulation $f_1$. Alternativement, la détection synchrone du signal peut être réalisée numériquement, par un traitement numérique des signaux directement issus de la détection optique. Avantageusement, sur chacune des voies Signal et Idler, un télescope (non représenté) de grandissement 1 permet de régler la divergence des faisceaux Signal et Idler afin d'optimiser leur recouvrement spatial au foyer de l'objectif. Un télescope 69, par exemple de grandissement 3, permet d'élargir le diamètre des faisceaux d'excitation afin de remplir pleinement la pupille arrière de l'objectif. Dans ce cas l'ouverture numérique d'excitation est celle indiquée par le constructeur d'objectif. Par exemple, les faisceaux Signal et Idler sont excités selon leur mode fondamental TEM00 de sorte que les champs électrique et magnétique sont tous les deux perpendiculaires à la direction de propagation de ces signaux; les trois faisceaux Laser, Signal et Idler sont par exemple polarisés rectilignement, avec la même direction de polarisation, permettant l'optimisation du signal dans un milieu homogène.

Selon une variante, une platine motorisée 46 permet de déplacer l'échantillon relativement au volume de focalisation commun des trains d'impulsions afin de former une image de l'échantillon pour une application du dispositif à l'imagerie SRS. Les objectifs de focalisation et de collection, ainsi que la platine 46 sont par exemple agencés dans un corps de microscope 40. Alternativement, un système de balayage des faisceaux excitateurs peut être utilisé pour déplacer le volume de focalisation dans l'échantillon. Dans l'exemple d'application à l'imagerie SRS, les moyens de traitement 90 permettent en outre d'extraire le signal caractéristique recherché en fonction de la position dans l'échantillon pour générer une image.

Pour une application du dispositif à la spectroscopie ou à l'imagerie hyperspectrale, il est également possible de faire varier les pulsations $\omega_1$ et $\omega_3$ de l'Idler et du Signal, permettant de sonder le signal SRS en fonction de la fréquence vibrationnelle moléculaire $\Omega$. Les moyens de traitement 90 permettent alors d'extraire le signal caractéristique recherché en fonction de la fréquence vibrationnelle moléculaire $\Omega$ pour former un spectre.

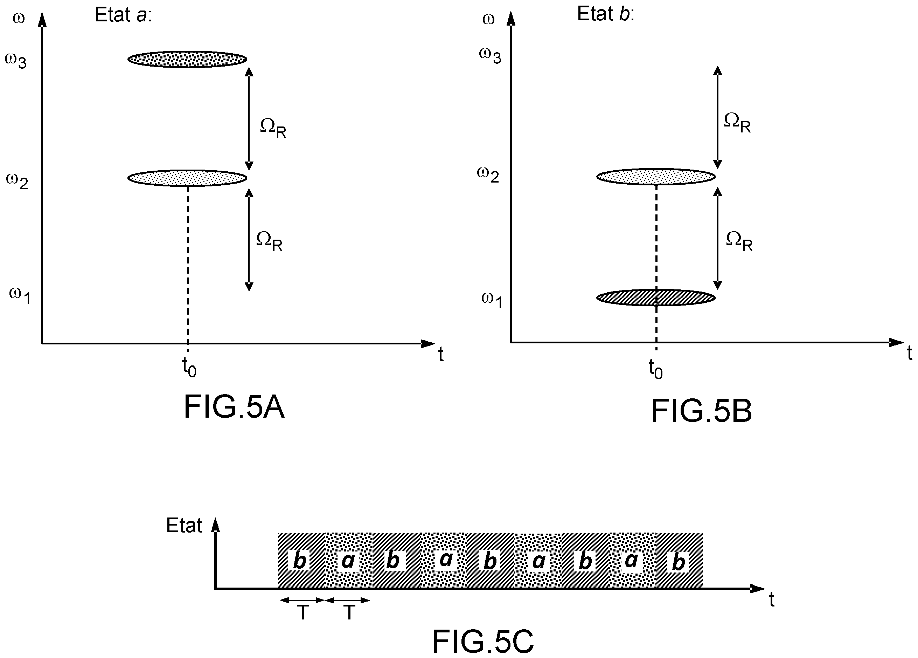

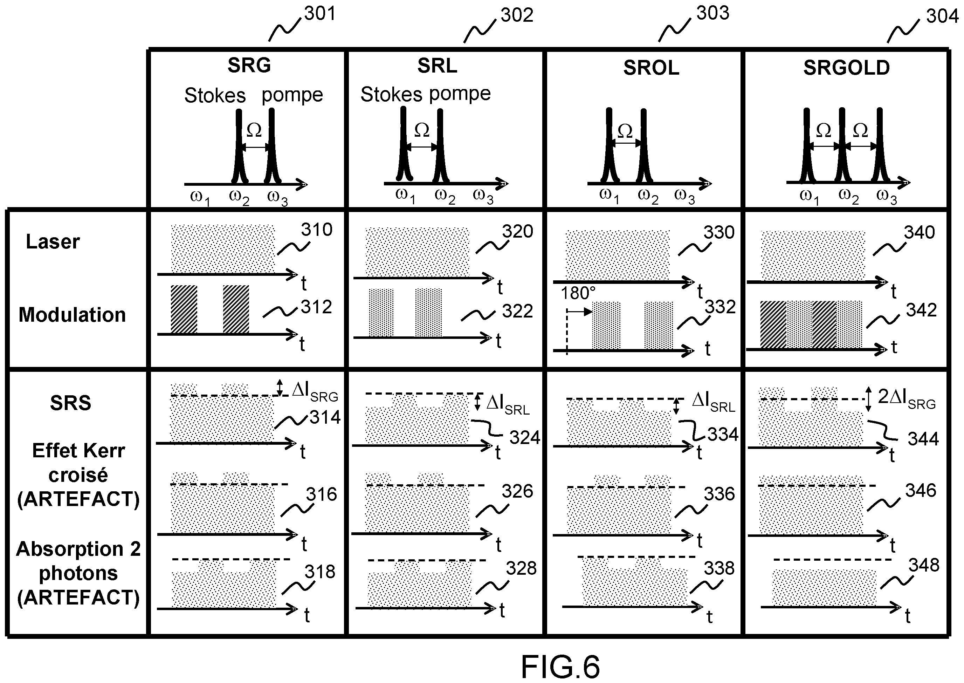

Les figures 5A à 5C et 6 illustrent le principe d'une méthode de détection selon une variante de la présente description, mise ne oeuvre par exemple au moyen du dispositif représenté sur la figure 4, et qui sera dénommée méthode SRGOLD dans la suite de la description, pour « Stimulated Raman Gain Opposite Loss Detection ».

La figure 5A illustre l'état dénommé « état a » dans lequel se superposent pendant la période de temps T des impulsions à la pulsation $\omega_2$ et des impulsions à la pulsation $\omega_1$. Selon cet exemple, les impulsions sont des impulsions courtes, par exemple des impulsions picosecondes, typiquement inférieures à 100 picosecondes. La figure 5B illustre l'état dénommé « état b » dans lequel se superposent pendant la même période de temps T mais en alternance avec l'état a, des impulsions à la pulsation $\omega_2$ et des impulsions à la pulsation $\omega_3$. On considère dans cet exemple que la différence des pulsations $\omega_2 - \omega_1$ et $\omega_3 - \omega_2$ est égale à $\Omega_R$, où $\Omega_R$ est une pulsation de résonance d'un mode vibrationnel moléculaire de l'échantillon. Grâce à la méthode mise en oeuvre par le dispositif représenté sur la figure 4, les états a et b s'alternent dans l'échantillon à la fréquence de modulation $f_1$, comme cela est illustré sur la figure 5C.

La figure 6 illustre les mécanismes physiques mis enjeu lors de l'interaction des trains d'impulsions aux pulsations $\omega_3$ et $\omega_2$ dans l'échantillon (« état b », colonne 301 : « SRG »), lors de l'interaction de trains d'impulsions aux pulsations $\omega_1$ et $\omega_2$ (colonne 302 : « SRL »), lors de l'interaction des trains d'impulsions aux pulsations $\omega_1$ et $\omega_2$ déphasé de 180° par rapport à l'état b (« état a », colonne 303 : « SROL ») et la détection mise en oeuvre (colonne 304 : « SRGOLD »).

On considère dans un premier temps (colonne 301) l'interaction entre le train d'impulsions Laser non modulé (12, figure 4) dont l'intensité est schématisée en fonction du temps sur la courbe 310, avec le train d'impulsions à la pulsation $\omega_3$, modulé en amplitude à la fréquence de modulation $f_1$ (17, figure 4) dont l'intensité est schématisée en fonction du temps sur la courbe 312. Sur ces schémas, seule l'enveloppe du train d'impulsions est représentée. Dans cette interaction, les impulsions à la pulsation $\omega_3$ (Signal) jouent le rôle de pompe tandis que les impulsions Laser à la pulsation $\omega_2$ jouent le rôle de Stokes. Ces dernières subissent après interaction dans l'échantillon un gain d'énergie (SRG) de la part des impulsions Stokes, schématisé sur la courbe 314 par la variation d'intensité $\Delta I_{SRG}$. Les courbes 316 et 318 illustrent les effets des artefacts dus respectivement à l'effet Kerr croisé et à l'absorption à 2 photons. On suppose dans cet exemple que l'effet Kerr croisé se traduit par un effet de focalisation entraînant un gain d'intensité des impulsions Laser, modulé à la fréquence de modulation $f_1$. L'absorption à 2 photons se traduit par une perte d'intensité des impulsions Laser à la fréquence de modulation $f_1$.

On considère ensuite (colonne 302) l'interaction entre le train d'impulsions Laser non modulé dont l'intensité est schématisée en fonction du temps sur la courbe 320, avec un train d'impulsions à la pulsation $\omega_1$, modulé en amplitude à la fréquence de modulation $f_1$ et dont l'intensité est schématisée en fonction du temps sur la courbe 322. Dans cette interaction, les impulsions à la pulsation $\omega_1$ (Idler) jouent le rôle de Stokes tandis que les impulsions Laser à la pulsation $\omega_2$ jouent le rôle de pompe. Ces dernières subissent donc après interaction dans l'échantillon une perte d'énergie (SRL) schématisé sur la courbe 324 par la variation d'intensité $\Delta I_{SRL}$. Les courbes 326 et 328 illustrent les effets des artefacts dus respectivement à l'effet Kerr croisé et à l'absorption à 2 photons. Si les impulsions à la pulsation $\omega_3$ induisent sur les impulsions Laser un effet Kerr croisé se traduisant par un effet de focalisation (courbe 316), les impulsions à la pulsation $\omega_1$ se traduisent également par un effet de focalisation des impulsions Laser entraînant un gain d'intensité de celle-ci, modulé à la fréquence de modulation $f_1$ (courbe 326). L'absorption à 2 photons se traduit comme précédemment par une perte d'intensité des impulsions Laser à la fréquence de modulation $f_1$ (courbe 328). Ainsi, on constate que lorsque les trains d'impulsions aux pulsations $\omega_1$ et $\omega_3$ sont modulés en amplitude en phase, les artefacts induits sont également en phase tandis que les modulations SRL et SRG sont en opposition de phase (comparaison des courbes 314 et 324).

Supposons maintenant que le train d'impulsions Laser à la pulsation $\omega_2$ (courbe 330, colonne 303) interagit avec le train d'impulsions à la pulsation $\omega_1$, modulé en amplitude en opposition de phase par rapport à la modulation du train d'impulsions à la pulsation $\omega_3$ (courbe 332, colonne 303). Dans ce cas, la modulation SRL des trains d'impulsions Laser (courbe 334) est en phase avec la modulation SRG (courbe 314) tandis que les artefacts induits par les trains d'impulsions à la pulsation $\omega_1$ (courbes 336, 338) sont en opposition de phase avec ceux induits par les trains d'impulsions à la pulsation $\omega_3$ (courbes 316, 318). La méthode décrite selon la présente variante, baptisée SRGOLD pour "Stimulated Raman Gain Opposite Loss Detection", consiste ainsi à moduler en amplitude les trains d'impulsions aux pulsations $\omega_1$ et $\omega_3$ en opposition de phase (courbes 342, colonne 304) et à détecter les modulations induites sur le train d'impulsions Laser non modulé (courbe 340) par détection synchrone à la fréquence de modulation. Dans ces conditions, les artefacts, en opposition de phase, se compensent (voir courbes 346, 348 colonne 304) et disparaissent lors de la détection synchrone. De plus, les signaux SRL et SRG sont en phase et s'additionnent lors de la détection synchrone (courbe 344) selon l'expression :

$$\Delta I_{SRGOLD} = \Delta I_{SRG} + \Delta I_{SROL}$$
$$= \Delta I_{SRG} + \Delta I_{SRL} \times cos(180°)$$

En négligeant le chromatisme et en supposant que les intensités d'excitation sont équivalentes (intensité des impulsions à la pulsation $\omega_1$ incidentes dans l'échantillon identique à l'intensité des impulsions à la pulsation $\omega_3$), on en déduit :

$$\Delta I_{SRGOLD} \approx 2\Delta I_{SRG}$$

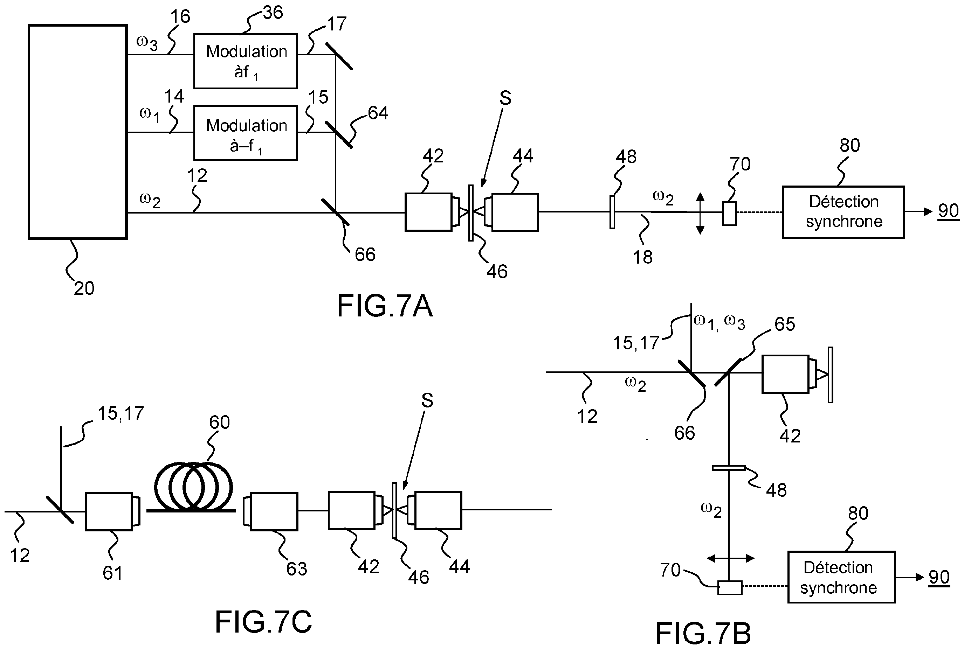

Le dispositif de détection 10 représenté sur la figure 4 comprend des moyens de détection optique avant (ou « forward » selon l'expression anglo-saxonne) et la propagation des faisceaux excitateurs dans le dispositif est réalisée en espace libre. Les figures 7A à 7D illustrent de façon schématique différentes variantes du dispositif de détection représenté sur la figure 4. Les représentations sont partielles, seuls les éléments utiles à la compréhension étant représentés.

La figure 7A représente un dispositif de détection similaire à celui de la figure 4. Par souci de simplification, tous les éléments n'ont cependant pas été représentés. Notamment, le bloc 36 représente le module permettant la modulation en amplitude à la fréquence de modulation $f_1$ des trains d'impulsions à la pulsation $\omega_1$ et le bloc 34 représente le module permettant la modulation en amplitude à la fréquence de modulation $f_1$ des trains d'impulsions à la pulsation $\omega_3$, en opposition de phase avec la modulation des trains d'impulsions à la pulsation $\omega_1$. Dans la suite de la description, on note « - $f_1$ » la modulation à la fréquence $f_1$ en opposition de phase.

La figure 7B illustre selon une représentation partielle, une variante du dispositif représenté sur la figure 7A, dans lequel la détection optique est réalisée en mode arrière (ou « epi »). Dans cette configuration, l'objectif de focalisation 42 agit également comme objectif de collection, le signal détecté étant le signal rétrodiffusé par l'échantillon. Les moyens de détection optique peuvent comprendre selon cette variante en plus du détecteur rapide 70 une lame dichroïque semi-réfléchissante 65 permettant de réfléchir les trains d'impulsions à la pulsation $\omega_2$. Grâce à la méthode de détection selon la présente description, les effets des artefacts résultant notamment de l'absorption à 2 photons et de l'effet Kerr optique croisé induisant un effet de diaphragmation modulé au niveau de l'objectif 42 agissant comme objectif de collection du signal SRS, sont supprimés comme cela a été expliqué précédemment, alors que le signal SRS utile est multiplié.

La figure 7C illustre selon une représentation partielle, une variante du dispositif représenté sur la figure 7A, dans lequel la propagation des faisceaux excitateurs 12, 15, 17 est réalisée en mode fibré, au moins partiellement. Dans les applications en microscopie optique par exemple, on recherche une propagation par fibre optique des faisceaux lumineux se propageant dans le dispositif, notamment pour des questions d'encombrement et de facilité de réglage des composants optiques. Dans l'exemple représenté sur la figure 7C, la propagation des faisceaux excitateurs est réalisée au moyen d'une fibre optique 60 située en amont de l'objectif de focalisation 42. La fibre optique est par exemple une fibre monomode. Des objectifs 61 et 63 permettent respectivement de coupler les faisceaux excitateurs en entrée et en sortie de fibre. La méthode de détection décrite dans la présente description permet alors non seulement de limiter les effets des artefacts résultant des interactions des faisceaux excitateurs dans l'échantillon, comme cela a été décrit précédemment, mais aussi de limiter des artefacts possibles de mesure résultant d'effets non linéaires dans la fibre optique 60. Du fait en effet des intensités lumineuses propagées dans la fibre, des effets non linéaires de type mélange dégénéré à quatre ondes ou effet Kerr croisé peuvent se produire dans la fibre elle-même et entrainer pour les mêmes raisons que celles expliquées précédemment une déplétion des impulsions Laser à la fréquence de modulation $f_1$, générant ainsi un artefact de mesure. En modulant les trains d'impulsions aux pulsations $\omega_1$ et $\omega_3$ à la même fréquence mais en opposition de phase, et en opérant une détection synchrone du signal à la pulsation $\omega_2$, on s'affranchit aussi des artefacts générés par les effets non linéaires dans la fibre.

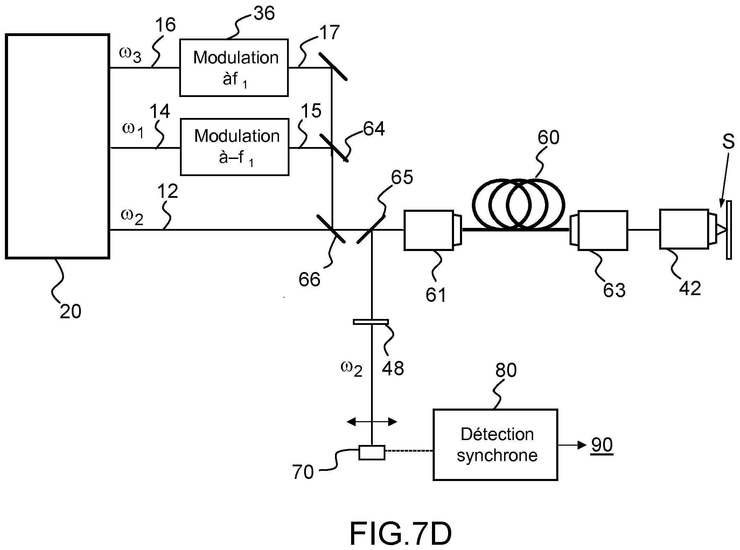

La figure 7D illustre selon une représentation partielle, une variante du dispositif représenté sur la figure 7A, dans lequel la propagation des faisceaux excitateurs 12, 15, 17 est réalisée au moins partiellement en mode fibré, et la détection optique est réalisée selon un mode de détection endoscopique. L'échantillon S correspond ici par exemple à des couches profondes d'un milieu biologique. La détection est faite en mode arrière (ou epi). Le signal optique non linéaire d'intérêt à la pulsation $\omega_2$ rétrodiffusé par l'échantillon est transmis après passage dans la fibre optique 60 au moyen d'un miroir dichroïque vers le détecteur rapide 70. Dans ce mode de détection, en plus de la diaphragmation par l'objectif 42 agissant comme objectif de collection du signal SRS, le signal peut également être diaphragmé par la fibre optique 60. La méthode selon la présente description permet de s'affranchir de l'ensemble des artefacts, y compris ceux résultants de la diaphragmation par la fibre optique.

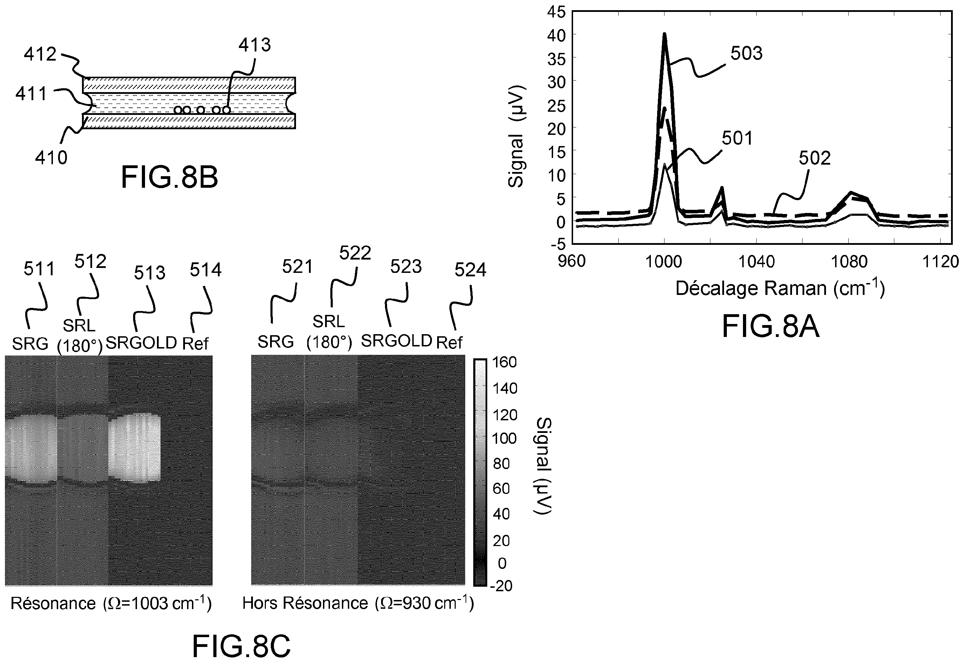

Les figures 8A à 8C montrent des premiers résultats expérimentaux visant à valider la méthode de détection mise en oeuvre avec un dispositif tel que représenté sur la figure 4 sur des échantillons non diffusants.

La figure 8A montre trois spectres obtenus avec une cuve de chlorobenzène, réalisés entre 960 et 1120 cm$^{-1}$. Pour mettre en évidence les effets d'artefact dus à l'effet Kerr croisé, un diaphragme est agencé en amont du détecteur, fermé de telle sorte à couper 50% de l'intensité des impulsions Laser à la pulsation $\omega_2$. Les courbes 501, 502, 503 représentent les spectres réalisés respectivement selon les modes SRG, SROL et SRGOLD tels que décrits sur la figure 6. Plus précisément, la courbe en mode SRG est obtenue en coupant le train d'impulsions à la pulsation $\omega_1$, la courbe en mode SROL est obtenue en coupant le train d'impulsions à la pulsation $\omega_3$ et la courbe en mode SRGOLD est obtenue en faisant interagir dans la cuve de liquide les trains d'impulsions aux pulsations $\omega_1$, $\omega_2$, $\omega_3$, les trains d'impulsions aux pulsations $\omega_1$, $\omega_3$ étant modulés en amplitude, en opposition de phase. Pour ces expériences, la puissance optique moyenne du train d'impulsions Laser, mesurée après le combineur 66 (figure 4) est fixée à 90 mW, les puissances optiques moyennes des trains d'impulsions aux pulsations $\omega_1$, $\omega_3$ sont fixées à 50 mW de manière à ce que l'effet Kerr croisé généré par les impulsions à la pulsation $\omega_1$ et considéré comme principale composante des artefacts, compense exactement l'effet Kerr croisé généré par les impulsions à la pulsation $\omega_3$. Ce réglage peut être effectué en annulant le signal SRGOLD en dehors des résonances, par exemple à $\Omega = 960$ cm$^{-1}$. On observe sur la courbe 501 que le spectre SRG, obtenu par détection synchrone à la fréquence $f_1$ du signal SRS résultant de l'interaction entre le train d'impulsions Laser ($\omega_2$) et le train d'impulsions Signal ($\omega_3$) modulé en amplitude à la fréquence $f_1$, est parasité par un offset négatif correspondant à l'effet Kerr croisé, l'effet Kerr se traduisant ici par un effet de défocalisation du faisceau Laser. Comme attendu, le spectre SROL (courbe 502), obtenu par détection synchrone à la fréquence $f_1$ du signal SRS résultant de l'interaction entre le train d'impulsions Laser ($\omega_2$) et le train d'impulsions Idler ($\omega_1$) modulé en amplitude à la fréquence $f_1$ mais en opposition de phase, présente un offset dû à l'effet Kerr croisé de signe opposé à celui observé en configuration SRG. En mode SRGOLD (courbe 503), la détection synchrone à la fréquence $f_1$ du signal Laser permet de supprimer l'effet des artefacts dus à l'effet Kerr croisé qui sont de signes opposés et se compensent sur toute la gamme spectrale. Ces expériences permettent de valider qu'avec la méthode SRGOLD ainsi décrite, il est possible de supprimer complètement l'effet Kerr croisé dans un milieu homogène.

La figure 8C montre une validation en imagerie de la méthode SRGOLD décrite ci-dessus. Pour ces expériences, une série d'images est réalisée à résonance ($\Omega = 1003$ cm$^{-1}$) et hors-résonance ($\Omega = 930$ cm$^{-1}$) sur un échantillon tel qu'illustré sur la figure 8B et comprenant des billes de polystyrène 413 de 20 $\mu$m de diamètre, immergées dans un liquide d'indice 411 d'indice de réfraction 1,54 entre deux lames de verre 410, 412. L'expérience à été réalisée, comme précédemment, avec un diaphragme positionné en amont du détecteur et partiellement fermé afin de maximiser la détection de l'effet Kerr croisé. La puissance optique moyenne du train d'impulsions Laser est d'environ 160 mW, celle du train d'impulsions Signal (pulsation $\omega_3$) d'environ 70 mW. Les artefacts sont minimisés sur le liquide en ajustant la puissance optique moyenne du train d'impulsions Idler (pulsation $\omega_1$) à environ 30 mW. La figure 8C représente respectivement des images d'une bille de polystyrène à la résonance en mode SRG (511), SROL (512), SRGOLD (513), comparées à l'image du faisceau Laser non modulé (514). La figure 8C représente ces mêmes images hors résonance (images 521 à 524 respectivement). L'image « Laser » est une image de référence qui permet d'évaluer le bruit et qui est obtenue en coupant les trains d'impulsions aux pulsations $\omega_1$, $\omega_3$. A résonance et hors-résonance, les mesures SRG et SROL font clairement apparaitre la présence d'artefacts, de signes opposés. A résonance, sur l'image SRGOLD, la contribution du liquide disparait et le signal SRS provenant de la bille est plus intense que sur les images SRG et SROL (somme des deux contributions). Hors-résonance, on constate que les artefacts ont été considérablement réduits par rapport aux images SRG et SROL. La contribution du liquide a complètement disparu. Seul un léger résidu d'artefact (< 10% par rapport aux artefacts de l'image SRG) est mesuré sur la bille.

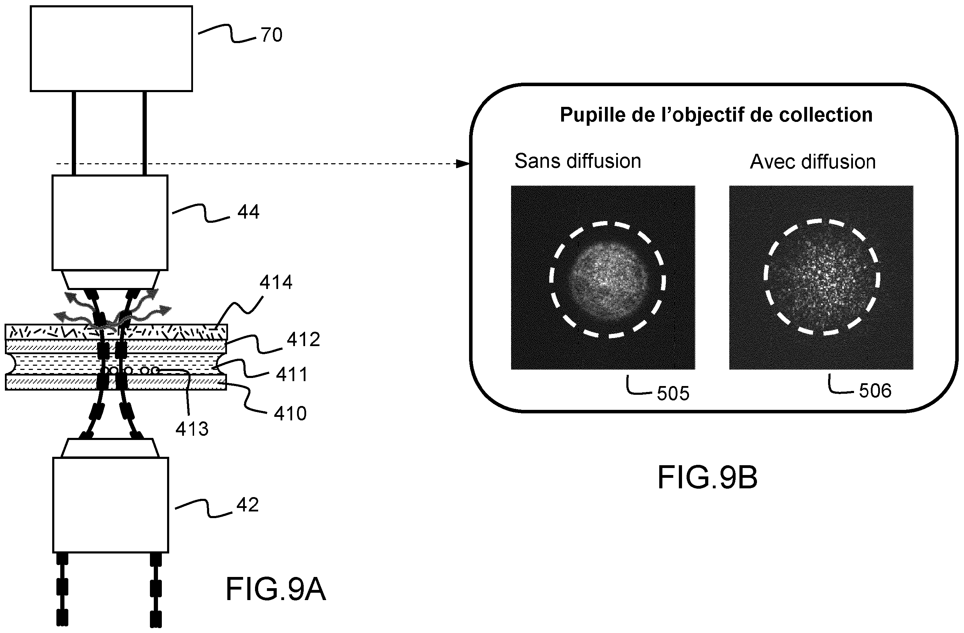

Les figures 9A à 9D illustrent des résultats expérimentaux obtenus avec un échantillon diffusant, dont les caractéristiques sont plus proches d'un tissu biologique.

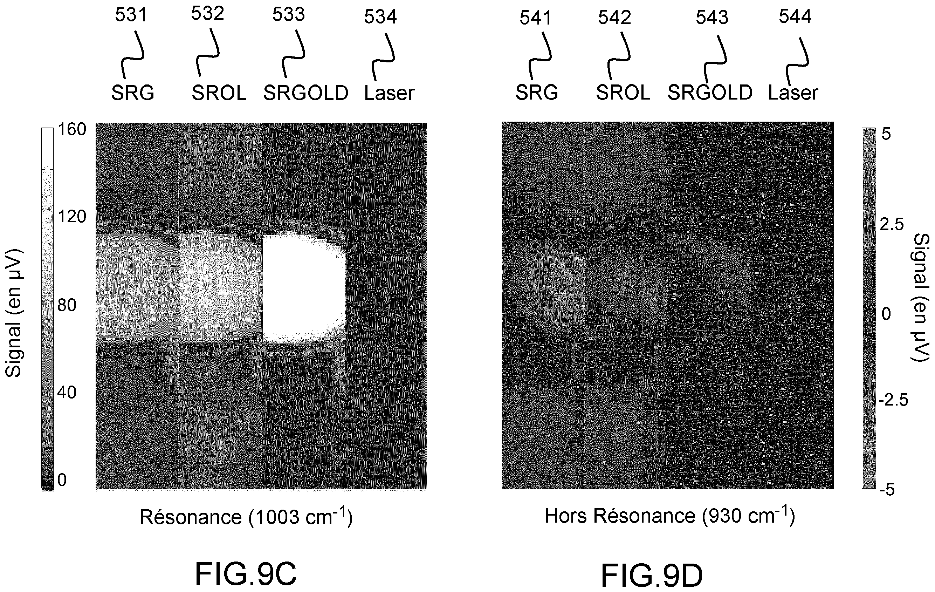

La figure 9A représente l'échantillon, identique à celui de la figure 8B mais sur lequel un diffuseur 414 a été agencé, par exemple une feuille de ruban adhésif posée au dessus de la cuve contenant les billes de polystyrène immergées dans le liquide d'indice. Aucun diaphragme n'est cette fois ci présent dans le dispositif et l'ouverture numérique de l'objectif de collection 44 est choisie supérieure à celle de l'objectif de focalisation 42. Les images 505 et 506 (figure 9B) représentent les images du faisceau Laser au niveau de la pupille arrière de l'objectif de collection, respectivement en l'absence du diffuseur et en présence du diffuseur. Le cercle blanc en pointillés délimite les dimensions de la pupille de l'objectif. En l'absence du diffuseur, le faisceau Laser n'est pas diaphragmé car l'ouverture numérique de collection est supérieure à celle d'excitation. En revanche, la présence du diffuseur élargit le spectre angulaire du faisceau Laser en sortie de l'échantillon. La pupille de l'objectif de collection joue le rôle de diaphragme. Une partie de l'énergie (environ 12,5 %) est ainsi bloquée. Les figures 9C et 9D représentent respectivement des images d'une bille de polystyrène à résonance (531 à 534) et hors-résonance (541 à 544) pour les configurations SRG, SROL SRGOLD et Laser. Pour l'obtention de ces images, les puissances sont d'environ 50 mW (Laser), 50 mW (Idler) et 60 mW (Signal). L'échelle de couleurs est adaptée pour mettre en évidence les artefacts. Les images SRG (531, 541) et SROL (532, 542) montrent la détection de l'effet Kerr croisé dû à la diffusion de l'échantillon. Comme pour les expériences précédentes, on constate que sur les images SRGOLD (533, 543), la contribution du liquide a disparu et que celle de la bille hors-résonance a été largement réduite.

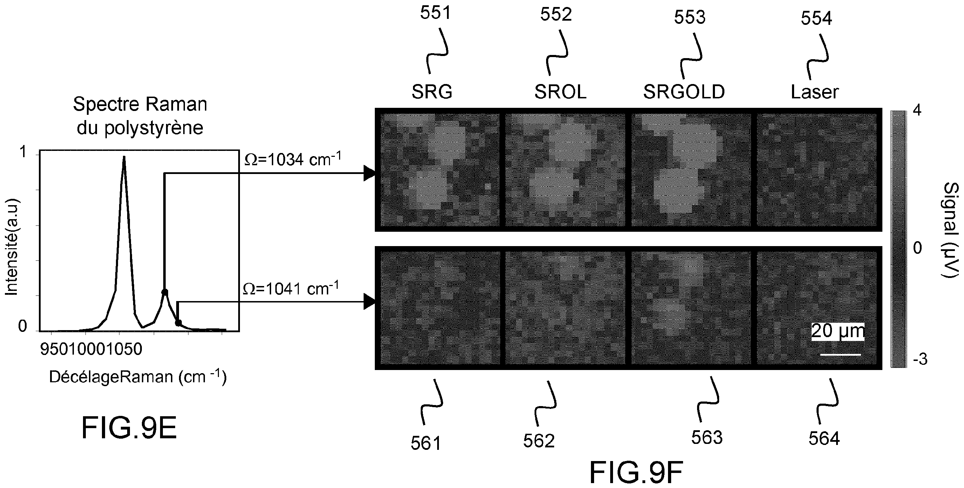

Notons que la raie Raman étudiée ici ($\Omega = 1003$ $cm^{-1}$) est extrêmement intense par rapport aux artefacts. La figure 9F présente une série d'images de 50 x 50 $\mu m$ réalisées sur le même échantillon diffusant que précédemment, à $\Omega = 1034$ $cm^{-1}$ (images 551 à 554) et à $\Omega = 1041$ $cm^{-1}$ (images 561 à 564). Cette dernière fréquence est légèrement décalée par rapport au maximum de la raie Raman à 1034 $cm^{-1}$ (voir le spectre Raman 510 du polystyrène représenté sur la figure 9E) et permet ainsi de simuler le cas d'une raie Raman d'intensité comparable aux artefacts. Pour cette fréquence, le contraste des billes de polystyrène sur les images SRG et SROL (561, 562) est faible car la mesure est dominée par l'effet Kerr croisé. En revanche, l'image SRGOLD (563) permet d'apporter un bon contraste des billes car les artefacts sont réduits et le signal SRS est environ deux fois plus fort que sur les images SRG ou SROL. Notons que les différentes images sont sujettes au même bruit apporté par le faisceau Laser et par le bruit électronique.

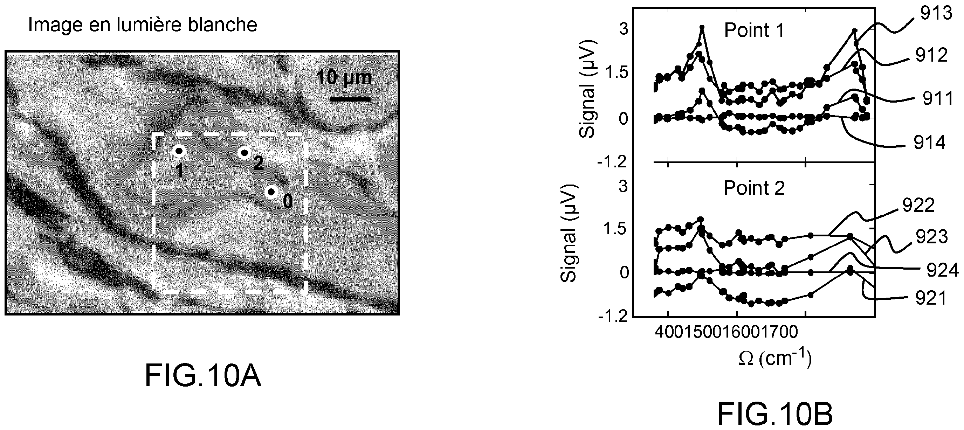

Les figures 10A à 10C montrent des premiers résultats obtenus grâce à la méthode SRGOLD décrite selon la présente variante, sur des tissus biologiques. Le tissu biologique est formé de peau de souris (coupe de 20 $\mu m$ d'épaisseur). La figure 10A présente une image en lumière blanche de la zone étudiée. La compensation des artefacts a été effectuée hors-résonance (1550 $cm^{-1}$) au point noté 0 sur l'image en lumière blanche. Ce point a été choisi arbitrairement. Les puissances optiques moyennes sont d'environ 33 mW (Laser), 40 mW (Idler), 86 mW (Signal). La figure 10B présente les spectres SRG (911, 921), SROL (912, 922), SRGOLD (913, 923) et la référence Laser (914, 924) dans la gamme spectrale des amides (1350-1700 $cm^{-1}$) mesurés respectivement aux points 1 et 2 indiqués sur l'image en lumière blanche. Dans les deux cas, les mesures SRG et SROL sont de signes opposés aux fréquences hors-résonance (autour de 1550 $cm^{-1}$), ce qui confirme la présence d'artefacts. Sur les spectres SRGOLD, l'influence des artefacts est réduite.

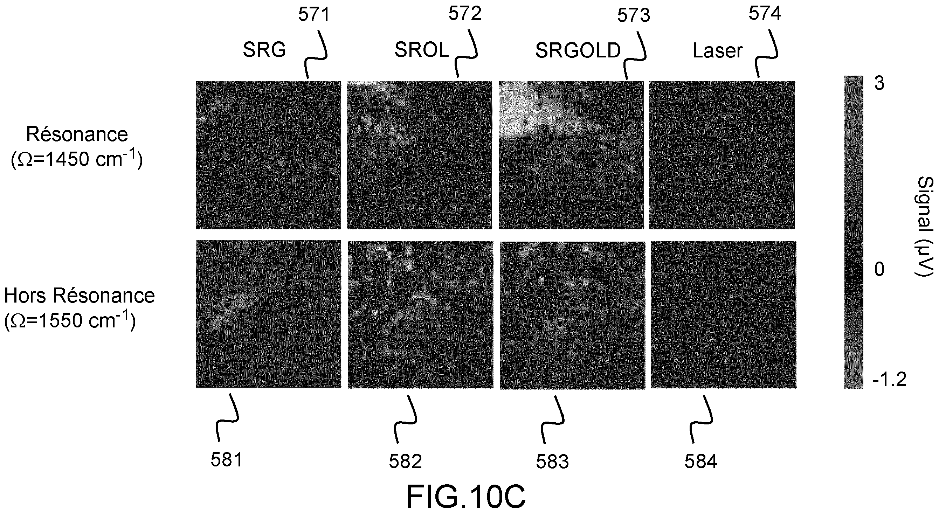

La figure 10C présente des images effectuées à la résonance des amides II (1450 $cm^{-1}$) et hors-résonance (1550 $cm^{-1}$) pour les différentes configurations SRG, SROL, SRGOLD, Laser (courbes notées respectivement 571 à 574 à la résonance et 581 à 584 hors résonance). La zone imagée est représentée en trait pointillé sur l'image en lumière blanche présentée sur la figure 10A. A la résonance, il est difficile d'identifier des structures sur les images SRG (571) et SROL (572), tandis que l'image SRGOLD (573) fait apparaitre une structure similaire à l'image en lumière blanche. Hors-résonance, l'image SRGOLD (583) apporte globalement une meilleure annulation du signal que les images SRG et SROL. Ces expériences démontrent, dans les tissus biologiques, l'influence de la diffusion sur la mesure SRS. La technique SRGOLD permet d'obtenir un meilleur contraste spatial et spectral, ainsi qu'une meilleure spécificité.

La méthode décrite au moyen du dispositif de la figure 4 ou 7A présente l'avantage d'être simple à mettre en oeuvre, une détection synchrone à une fréquence de modulation pouvant être réalisée sur un signal optique (train d'impulsions à la pulsation $\omega_2$) et utilise pour cette mise en oeuvre des composants couramment disponibles dans le commerce.

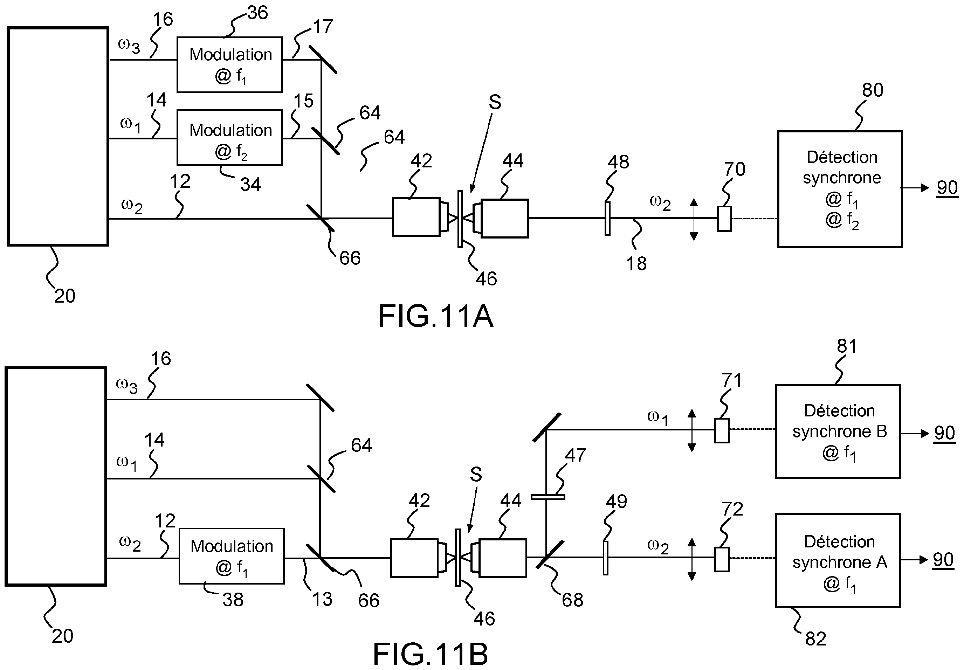

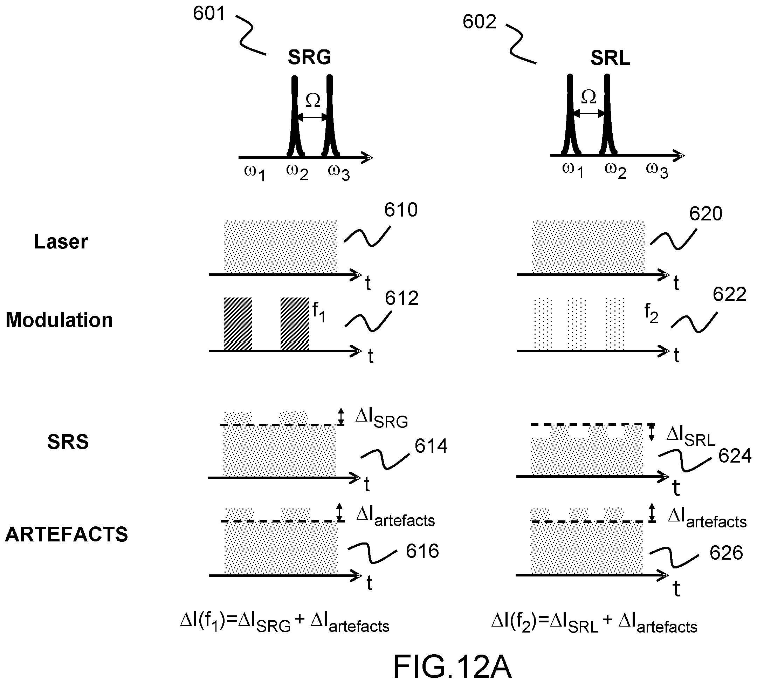

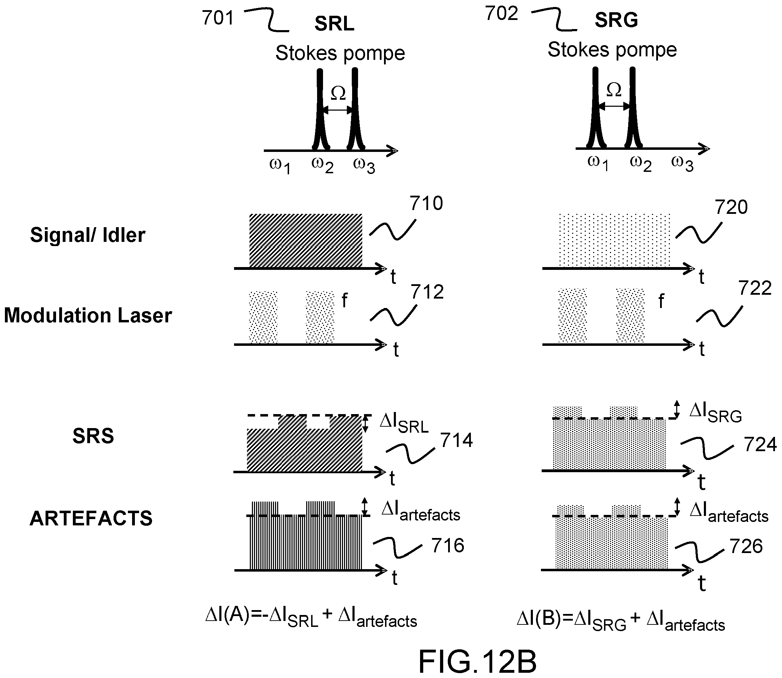

Les figures 11A et 11B illustrent deux variantes du dispositif représenté sur les figures 4 et 7A. Les figures 12A et 12B montrent des tableaux illustrant les signaux détectés (signaux SRS et artefacts) dans les exemples de mise en oeuvre des dispositifs décrits sur les figures 11A et 11B respectivement.

Dans l'exemple de la figure 11A, les trains d'impulsions 14 et 16 aux pulsations $\omega_1$ (Idler) et $\omega_3$ (Signal) sont modulés en amplitude à des fréquences de modulation $f_2$ et $f_1$ distinctes, non multiples l'une de l'autre pour former des trains d'impulsions 15, 17 modulés. Le train d'impulsons 12 à la pulsation $\omega_2$ (Laser) n'est pas modulé. Dans l'échantillon, interagissent donc les trains d'impulsions aux pulsation $\omega_2$ et $\omega_1$ (modulé) d'une part et les trains d'impulsions aux pulsations $\omega_2$ et $\omega_3$ (modulé) d'autre part. Comme précédemment, on détecte les impulsions à la pulsation $\omega_2$ issues de l'échantillon. Lors de l'interaction des impulsions Laser/Signal, le processus mis en jeu est un processus SRG, illustré sur la colonne 601 de la figure 12A. La courbe 610 montre le train d'impulsions laser non modulé, la courbe 612 le train d'impulsions à la pulsation $\omega_3$ modulé à la fréquence $f_1$. Sur ces courbes, seule l'enveloppe des trains d'impulsions est représentée. Le signal SRS résultant de l'interaction de ces deux trains d'impulsions présente une variation d'intensité $\Delta I_{SRG}$ positive, modulée à la fréquence de modulation $f_1$ (courbe 614). Les artefacts, présentant une contribution résultant de l'effet Kerr supposée prépondérante, présentent une variation d'intensité $\Delta I_{Artefacts}$ modulée à la même fréquence de modulation $f_1$ (courbe 616), supposée positive. Par détection synchrone à la fréquence de modulation $f_1$ on obtient donc un signal $\Delta I(f_1)$ tel que :

$$\Delta I(f_1) = \Delta I_{SRG} + \Delta I_{Artefacts}$$

Par ailleurs, lors de l'interaction des impulsions Laser/Idler, le processus mis enjeu est un processus SRL, illustré sur la colonne 602 de la figure 12A. La courbe 620 montre le train d'impulsions laser non modulé, la courbe 622 le train d'impulsions à la pulsation $\omega_1$ modulé à la fréquence $f_2$. Le signal SRL résultant de l'interaction de ces deux trains d'impulsions présente une variation d'intensité $-\Delta I_{SRL}$ négative, modulée à la fréquence de

modulation $f_2$ (courbe 624). Les artefacts présentent une variation d'intensité $\Delta I_{Artefacts}$ modulée à la même fréquence de modulation $f_2$ (courbe 626) et de même signe que la variation d'intensité due aux artefacts dans le processus SRG. En jouant sur les puissances optiques moyennes des trains d'impulsions incidents dans l'échantillon, il est possible d'obtenir des variations d'intensité $\Delta I_{Artefacts}$ de même valeur dans les deux processus SRG et SRL. Par détection synchrone à la fréquence de modulation $f_2$ on obtient donc un signal $\Delta I(f_2)$ tel que :

$$\Delta I(f_2) = -\Delta I_{SRL} + \Delta I_{Artefacts}$$

Un traitement électronique des signaux issus de la détection synchrone à la fréquence de modulation $f_1$ et de la détection synchrone à la fréquence de modulation $f_2$ permet alors, par soustraction, d'obtenir un signal SRS utile amplifié tandis que les signaux dus aux artefacts s'annulent. Il est également possible par cette méthode de déterminer la contribution des artefacts sur le signal total en procédant à une addition des signaux issus des détections synchrones, permettant d'avoir une autre information de contraste.

La figure 11B représente une autre variante dans laquelle les trains d'impulsions 14 et 16 aux pulsations $\omega_1$ (Idler) et $\omega_3$ (Signal) ne sont pas modulés mais c'est le train d'impulsions 12 à la pulsation $\omega_2$ (Laser) qui est modulé en amplitude à une fréquence f. Dans l'échantillon, interagissent donc les trains d'impulsions aux pulsation $\omega_1$ et $\omega_2$ (modulé) d'une part et les trains d'impulsions aux pulsations $\omega_3$ et $\omega_2$ (modulé) d'autre part. Contrairement aux méthodes précédemment décrites, on détecte dans cet exemple d'une part les impulsions à la pulsation $\omega_1$ issues de l'échantillon, d'autre part les impulsions à la pulsation $\omega_3$ issues de l'échantillon. Les moyens de détection comprennent ainsi deux voies séparées par un miroir dichroïque 68. Sur une première voie, un filtre 47 permet de transmettre les seules impulsions à la pulsation $\omega_1$ qui sont détectées au moyen d'un détecteur optique rapide 71. Sur la deuxième voie, un filtre 49 permet de transmettre les impulsions à la pulsation $\omega_3$, également détectées au moyen d'un détecteur optique rapide 72. Sur chaque voie une détection synchrone des signaux issus des détecteurs optiques est réalisée à la fréquence de modulation f. Lors de l'interaction des impulsions Laser/Signal dans l'échantillon, le processus mis enjeu est un processus SRL, illustré sur la colonne 701 de la figure 12B. La courbe 710 montre le train d'impulsions à la pulsation $\omega_3$ non modulé, la courbe 712 le train d'impulsions laser modulé à la fréquence f. Le signal SRL mesuré sur les impulsions à la pulsation $\omega_3$ (pompe) et résultant de l'interaction de ces deux trains d'impulsions présente une variation d'intensité - $\Delta I_{SRL}$ négative, modulée à la fréquence de modulation f (courbe 714). Les artefacts présentent comme précédemment une variation d'intensité $\Delta I_{Artefacts}$ modulée à la même fréquence de modulation f (courbe 716). Par détection synchrone à la fréquence de modulation fon obtient donc un signal $\Delta I(A)$ tel que :

$$\Delta I(A) = -\Delta I_{SRL} + \Delta I_{Artefacts}$$

Par ailleurs, lors de l'interaction des impulsions Laser/Idler, le processus mis enjeu est un processus SRG, illustré sur la colonne 702 de la figure 12B. La courbe 720 montre le train d'impulsions à la pulsation $\omega_1$ non modulé, la courbe 722 le train d'impulsions laser à la pulsation $\omega_2$ modulé à la fréquence f. Le signal SRG mesurée cette fois-ci sur les impulsions à la pulsation $\omega_1$ (Stokes) et résultant de l'interaction de ces deux trains d'impulsions présente une variation d'intensité $\Delta I_{SRG}$ positive, modulée à la fréquence de modulation f (courbe 724). Les artefacts présentent une variation d'intensité $\Delta I_{Artefacts}$ modulée à la même fréquence de modulation f (courbe 726) et de même signe que la variation d'intensité due aux artefacts dans le processus SRL. Comme précédemment, en jouant sur les puissances optiques moyennes des trains d'impulsions incidents dans l'échantillon, il est possible d'obtenir des variations d'intensité $\Delta I_{Artefacts}$ de même valeur dans les deux processus SRG et SRL. Par détection synchrone à la fréquence de modulation fon obtient donc un signal $\Delta I(B)$ tel que :

$$\Delta I(B) = \Delta I_{SRG} + \Delta I_{Artefacts}$$

Un traitement électronique des signaux issus des détections synchrones sur chacune des voies, à la fréquence de modulation f, permet alors, par soustraction, d'obtenir un signal SRS utile amplifié tandis que les signaux dus aux artefacts s'annulent. Il est également possible par cette méthode de déterminer la contribution des artefacts sur le signal total en procédant à une addition des signaux issus des détections synchrones.

Les exemples décrits jusqu'à maintenant ont mis en oeuvre une modulation d'amplitude de l'un ou de deux des trains d'impulsions. La méthode selon la présente description peut également être mise en oeuvre au moyen d'une modulation d'un retard temporel opéré entre le train d'impulsions laser à la pulsation $\omega_2$ et les trains d'impulsions aux pulsations $\omega_1$ et $\omega_3$.

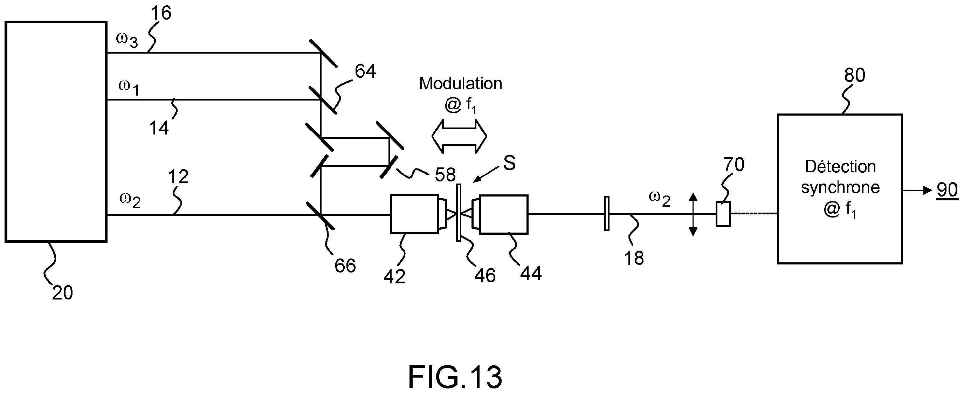

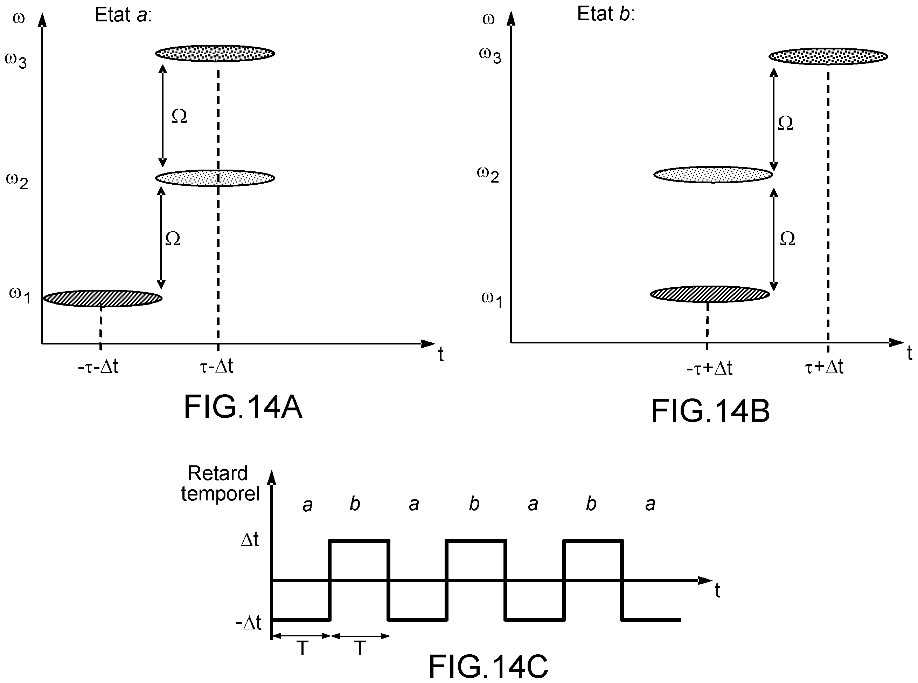

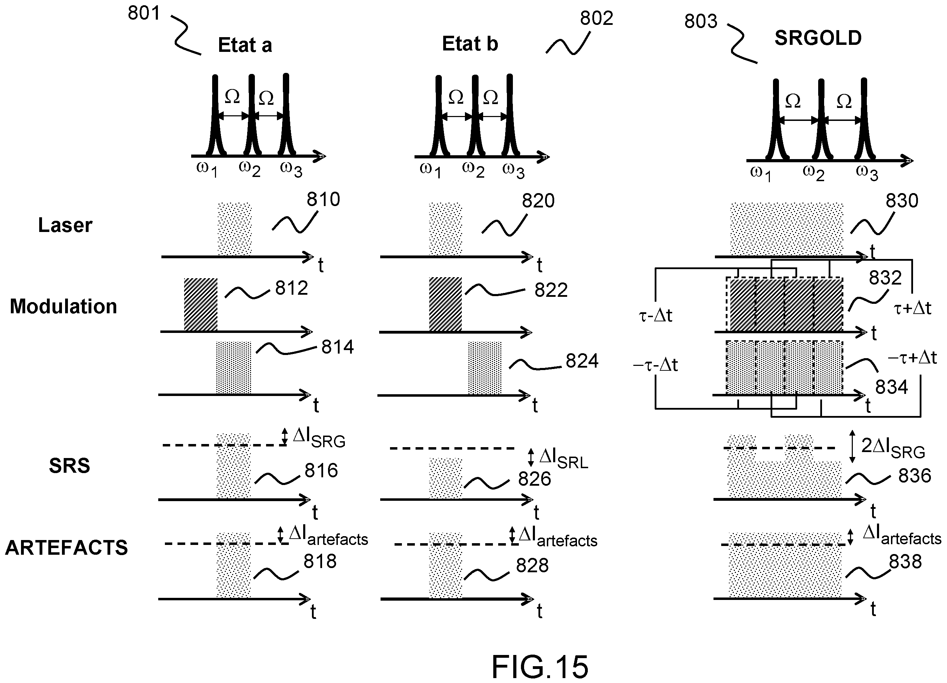

La figure 13 représente ainsi un exemple de réalisation d'un dispositif de détection SRS selon un exemple mettant en oeuvre une modulation du retard temporel. Les figures 14A à 14C représentent de façon schématique les interactions dans l'échantillon selon cet exemple et la figure 15 montre un tableau illustrant les signaux détectés (signaux SRS et artefacts) dans l'exemple de la mise en oeuvre du dispositif décrit sur la figure 13.

Dans le dispositif de la figure 13, une ligne à retard 58 est agencée sur une voie commune aux trains d'impulsions aux pulsations $\omega_1$ et $\omega_3$. Alternativement, la ligne à retard pourrait se trouver sur la voie des impulsions Laser (pulsation $\omega_2$). Cette ligne à retard permet d'introduire entre les impulsions aux pulsations $\omega_1$ et $\omega_3$ et les impulsions à la pulsation $\omega_2$ un retard temporel modulé à une fréquence de modulation $f_1$, comme cela est expliqué au moyen des figures 14A et 14B. La ligne à retard permet d'introduire une variation du chemin optique. La variation du chemin optique peut être obtenue de façon mécanique, entre deux positions. Alternativement, la ligne à retard peut comprendre un déflecteur acousto-optique alternant entre deux angles pour générer deux longueurs de chemin optique. En jouant sur des lignes à retard spécifiques à chaque voie Idler et Signal (voir par exemple les lignes à retard 54, 56, figure 4), on règle entre les impulsions aux pulsations $\omega_1$ et $\omega_3$ un retard fixe de $2\tau$. La modulation de la ligne à retard 58 (figure 13) permet d'introduire un retard temporel variant entre +/- $\Delta t$ à la fréquence de modulation $f_1$ de telle sorte à ce que les impulsions aux pulsations $\omega_2$ et $\omega_3$ soient superposées pendant une période de temps T dans l'échantillon (Etat a, figure 14A) et les impulsions aux pulsations $\omega_1$ et $\omega_2$ (Etat b, figure 14B) soient superposées pendant la période de temps T suivante, les états a et b s'alternant à la fréquence de modulation $f_1$ (figure 14C). Une détection synchrone sur les impulsions Laser à la pulsation $\omega_2$ permet alors de déterminer le signal caractéristique de la résonance vibrationnelle moléculaire de l'échantillon. Dans l'état a (colonne 801, figure 15), les impulsions aux pulsations $\omega_2$ (courbe 810) et $\omega_3$ (courbe 814) sont superposées temporellement tandis que les impulsions aux pulsations $\omega_1$ (courbe 812) sont décalées temporellement ; il en résulte un processus SRG sur les impulsions Laser illustré sur la courbe 816. Dans cet exemple à nouveau, on suppose que les artefacts sont dus principalement à l'effet Kerr croisé et se traduisent par un signal positif (courbe 818). Dans l'état b (colonne 802, figure 15), les impulsions aux pulsations $\omega_2$ (courbe 820) et $\omega_1$ (courbe 822) sont superposées tandis que les impulsions aux pulsations $\omega_3$ (courbe 824) sont décalées temporellement ; il en résulte un processus SRL sur les impulsions Laser illustré sur la courbe 826. Les artefacts se traduisent à nouveau par un signal positif (courbe 828). Comme précédemment, le réglage des puissances optiques moyennes des trains d'impulsions incidents dans l'échantillon permet de rendre égaux les signaux dus aux artefacts dans les processus SRG et SRL, par exemple en annulant le signal SRGOLD hors résonance comme cela a été expliqué précédemment. Ainsi, lors de la détection synchrone à la fréquence de modulation $f_1$ des impulsions issues de l'échantillon à la pulsation $\omega_2$ (colonne 803, figure 15), les artefacts s'annulent (courbe 838) tandis que le signal SRS utile est augmenté (courbe 836). Sur la figure 15, les courbes 830, 832 et 834 illustrent de façon schématique cette variante du processus SRGOLD précédemment décrite. Le train d'impulsions à la pulsation $\omega_2$ est émis de façon continue (courbe 830) tandis que les trains d'impulsions aux pulsations $\omega_1$ et

$\omega_3$ subissent un retard temporel modulé (courbes 832, 834). Notons que des variantes sont possibles dans l'agencement des lignes à retard. Il est possible comme c'est le cas sur la figure 13 de prévoir une ligne à retard sur la voie commune aux impulsions $\omega_1$ et $\omega_3$ ou une ligne à retard sur la voie des impulsions à la pulsation $\omega_2$. Dans ce cas, des lignes à retard spécifiques à chaque voie Idler/Signal permettent d'ajuster le retard $2\tau$ entre les impulsions aux pulsations $\omega_1$ et $\omega_3$. Alternativement, des lignes à retard peuvent être agencées de façon spécifique sur chaque voie Idler/Signal, avec sur chacune des voies un retard temporel modulé entre $\tau-\Delta t$ et $\tau+\Delta t$ pour une voie et - $\tau+\Delta t$ et -$\tau+\Delta t$ pour l'autre voie.

Bien que la détection optique ait été présentée dans les exemples des figures 11A, 11B et 13 en mode avant, une détection optique en mode arrière (epi) ou en mode endoscopique comme elles l'ont été précédemment illustrées au moyen des figures 7B et 7D est possible. Ces dispositifs peuvent également être au moins partiellement fibrés.

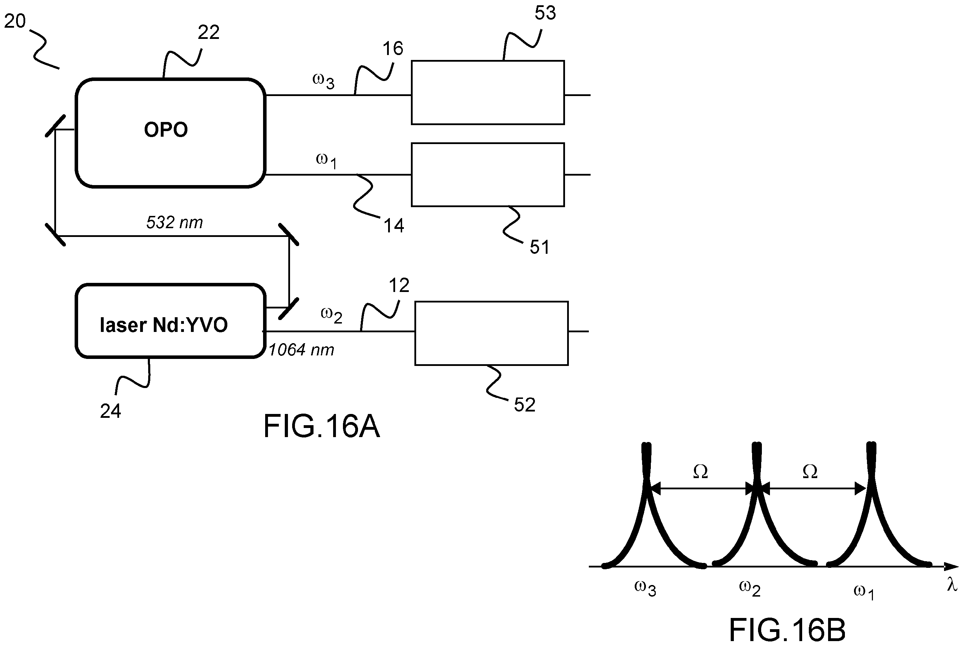

Les figures 16 à 20 illustrent plus en détails la mise en oeuvre de variantes de la méthode selon la présente description dans le cas où les impulsions sont des impulsions à dérive de fréquence.

Les figures 16A, 16B sont des schémas illustrant un exemple de réalisation d'une source de trains d'impulsions étendues spectralement. Cette source comprend par exemple une source OPO 20 à impulsions ultracourtes, typiquement inférieures à 200 fs comprenant un laser maître 24 par exemple de type Nd :YVO émettant des impulsions 12 à 1064 nm et un laser OPO 22 recevant du laser maître des impulsions 11 doublées en fréquence, autour de 532 nm. Le laser OPO émet par oscillation paramétrique optique des impulsions Idler 14 à la pulsation $\omega_1$ et des impulsions 16 Signal à la pulsation $\omega_3$. Sur chacune des voies Laser, Signal, Idler, une ligne à dispersion temporelle (respectivement 52, 53, 51) permet d'étendre l'impulsion ultracourte en une impulsion plus longue temporellement, typiquement inférieure à 100 picosecondes, par exemple de quelques picosecondes, et dont la pulsation varie linéairement avec le temps autour d'une pulsation centrale. La figure 16B illustre ainsi les impulsions en sortie de l'OPO. La ligne de dispersion temporelle peut comprendre de façon connue un matériau dispersif par exemple un barreau de verre, ou un compresseur à prisme ou à réseau.

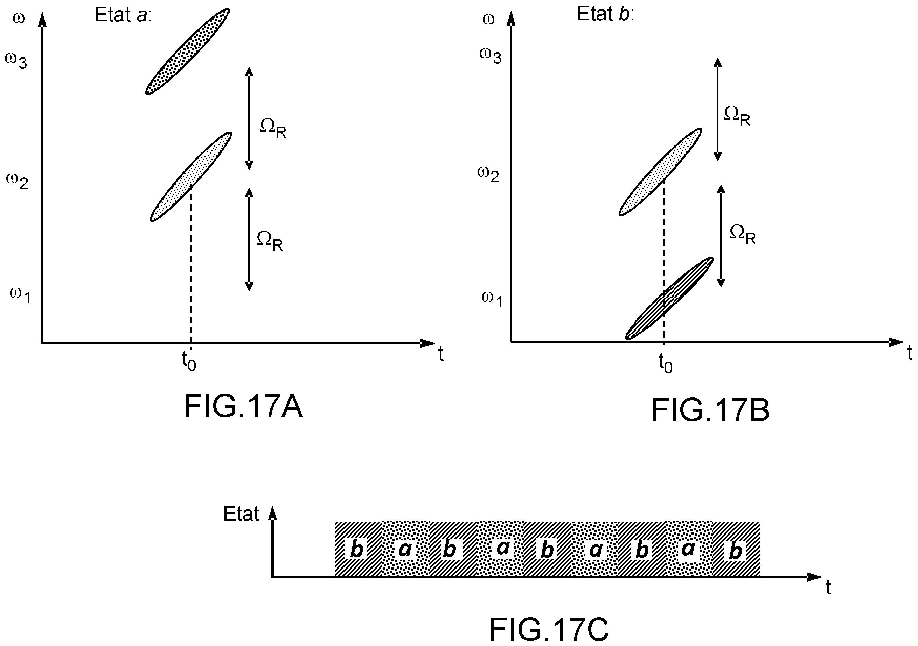

Les figures 17A à 17C illustrent les interactions dans l'échantillon dans la mise en oeuvre d'une méthode selon la présente description basée sur une modulation d'amplitude, lorsque les impulsions sont étendues spectralement. En comparaison avec les figures 5A à 5C, chaque impulsion présente une dérive linéaire de la pulsation en fonction du temps. La mise en oeuvre de la méthode SRGOLD est cependant inchangée. Notamment, les trains d'impulsions interagissent dans l'échantillon de façon alternée, à une fréquence de modulation donnée. A chaque instant, on observe que la condition $\omega_2 - \omega_1 = \omega_3 - \omega_2 = \Omega_R$ où $\Omega_R$ est une fréquence de résonance vibrationnelle moléculaire de l'échantillon est respectée, permettant de mettre en oeuvre la méthode selon la présente description. Dans cet exemple, un décalage temporel identique entre les impulsions aux pulsations $\omega_1$ et $\omega_2$ d'une part et les impulsions aux pulsations $\omega_2$ et $\omega_3$ d'autre part peut être introduit de telle sorte qu'il soit possible de sonder les fréquences de résonance vibrationnelle moléculaire, un léger décalage temporel entre les impulsions se traduisant par une variation de l'écart des pulsations entre les impulsions.

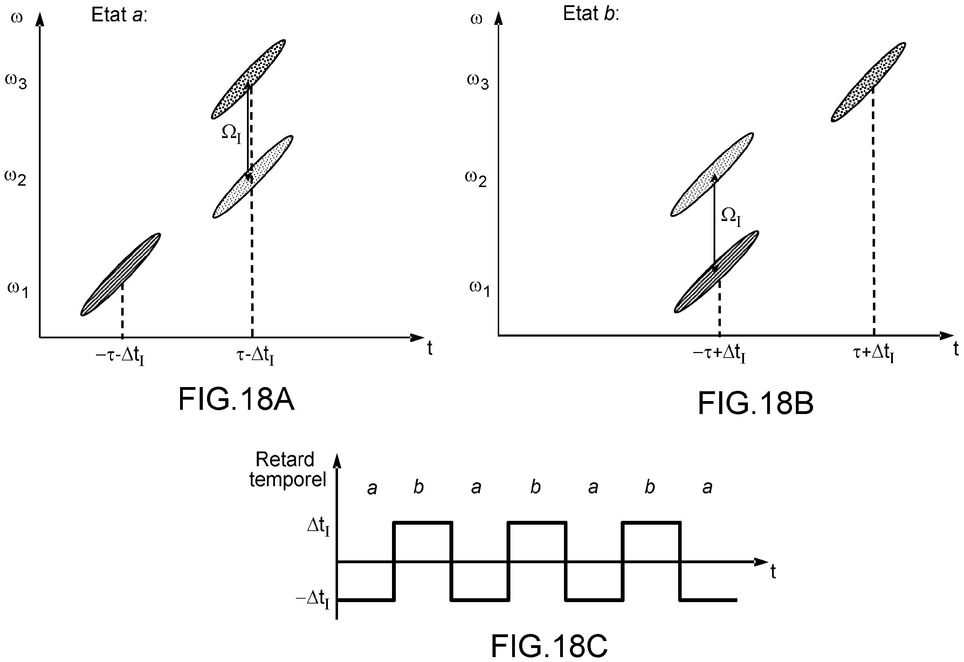

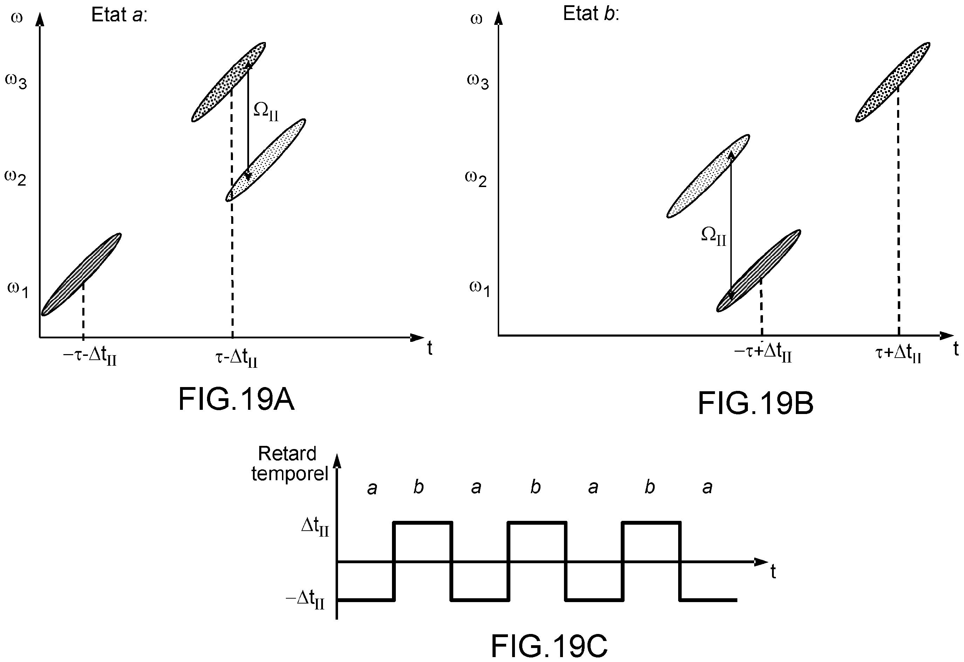

Les figures 18A à 18C illustrent les interactions dans l'échantillon dans la mise en oeuvre d'une méthode selon la présente description basée sur une modulation du retard temporel, lorsque les impulsions sont étendues spectralement. Là encore, la méthode décrite notamment en relation avec les figures 13 à 15 s'applique aux impulsions à dérive de fréquence. Dans le cas de l'utilisation d'impulsions à dérive de fréquence, il est également possible en réglant le retard temporel de modifier la fréquence de résonance vibrationnelle d'intérêt, notamment pour les applications de spectroscopie ou d'imagerie hyperspectrale. Sur les figures 18A et 18B, on observe une modulation du retard temporel entre deux valeurs $-\Delta t_1$ et $+\Delta t_1$. Cela correspond à un écart $\Omega_1$ entre les pulsations $\omega_2$ et $\omega_1$ d'une part et $\omega_3$ et $\omega_2$ d'autre part. Sur les figures 19A à 19C, les mêmes impulsions sont représentées mais avec une modulation du retard temporel entre deux valeurs $-\Delta t_2$ et $+\Delta t_2$, correspondant à un écart $\Omega_2$ entre les pulsations $\omega_2$ et $\omega_1$ d'une part et $\omega_3$ et $\omega_2$ d'autre part. La variation du retard temporel permet ainsi de sonder le spectre des résonances vibrationnelles.

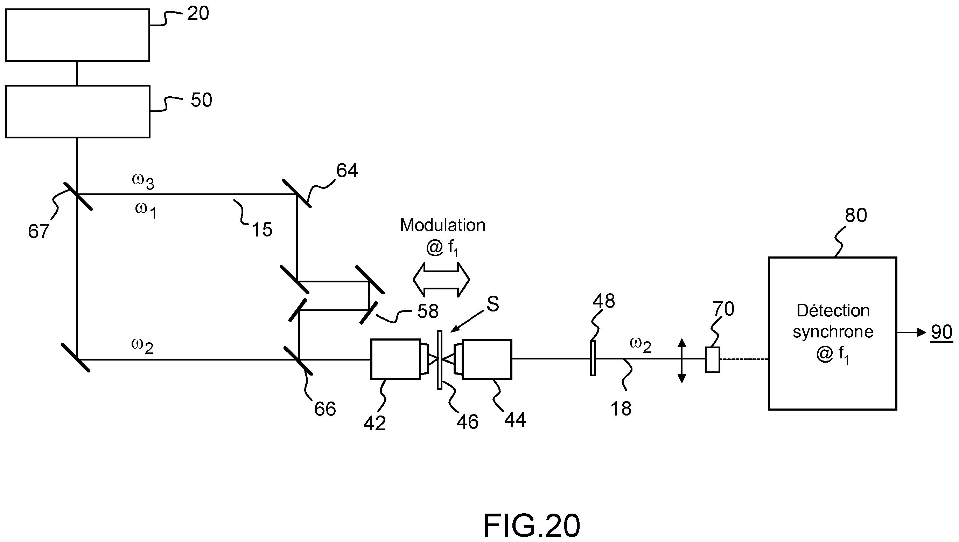

La figure 20 représente un exemple de réalisation d'un dispositif de détection SRS selon un autre exemple de la présente invention, mettant en oeuvre une modulation du retard temporel et des impulsions étendues spectralement. Dans cet exemple, la source d'émission 20 des trains d'impulsions émet des trains d'impulsions ultracourtes étendues temporellement au moyen d'un étireur 52 pour former des trains impulsions à dérive de fréquence centrées sur la pulsation $\omega_2$. Le dispositif comprend en outre une lame séparatrice dichroïque 67 permettant de séparer d'une part des impulsions centrées sur la pulsation $\omega_2$ et d'autre part des impulsions centrées respectivement sur les pulsations $\omega_1$ et $\omega_3$. Une modulation du retard temporel entre les trains d'impulsions à la pulsation $\omega_2$ et les trains d'impulsions aux pulsations $\omega_1$ et $\omega_3$ est alors possible au moyen par exemple d'une ligne à retard 58, comme cela a été décrit sur la figure 13 par exemple. La même méthode de détection synchrone peut être mise en oeuvre pour la détection du signal SRS.

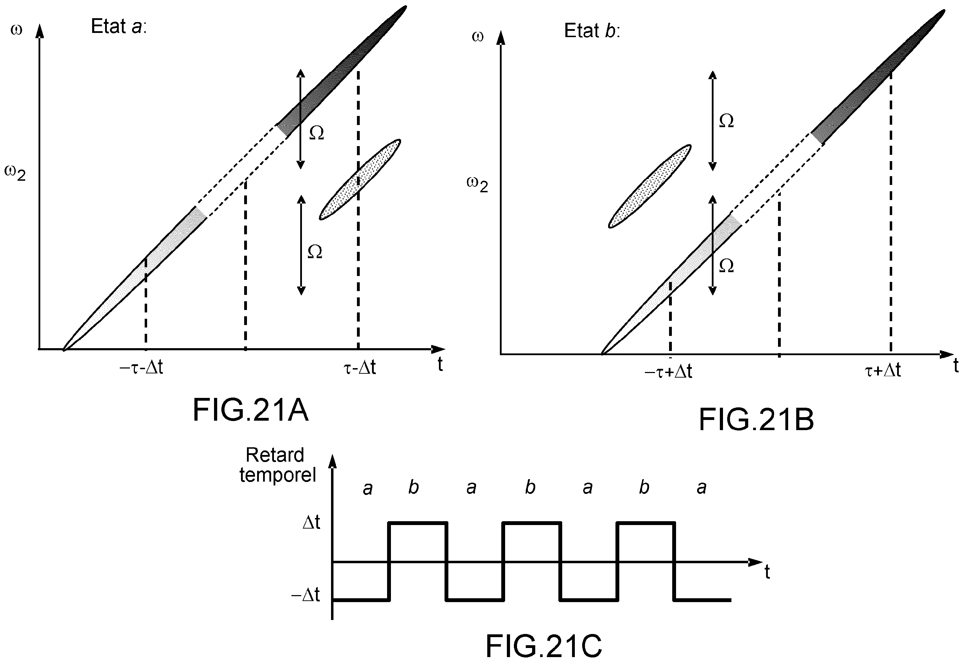

Les figures 21A à 21C illustrent les interactions dans l'échantillon dans l'exemple de la figure 20. Comme illustré sur les figures 18A à 18C, la modulation se fait entre un état a et un état b correspondant à un retard temporel de +/- $\Delta t$ entre les impulsions à la pulsation $\omega_2$ et les impulsions aux pulsations $\omega_1$ et $\omega_3$. On observe

dans cet exemple à nouveau que la variation du retard temporel $\Delta t$ permet très facilement de modifier la pulsation de résonance vibrationnelle d'intérêt $\Omega$.

Bien que décrite à travers un certain nombre d'exemples de réalisation détaillés, le dispositif de détection et la méthode selon l'invention comprend différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1. Dispositif pour détecter un signal optique non linéaire résonant de type Diffusion Raman Stimulée (SRS) induit dans un échantillon, le dispositif comprenant :

   - des moyens électro-optiques pour faire interagir dans l'échantillon, à une première fréquence de modulation, des trains d'impulsions lumineuses (14, 12) de pulsations $\omega_1$ et $\omega_2$ et, à une deuxième fréquence de modulation, des trains d'impulsions lumineuses (12, 16) de pulsations $\omega_2$ et $\omega_3$, telles que $\omega_2 - \omega_1 = \omega_3 - \omega_2 = \Omega_R$ où $\Omega_R$ est une pulsation de résonance vibrationnelle moléculaire de l'échantillon,
   - des moyens de détection synchrone (70, 80) aux première et deuxième fréquences de modulation de signaux optiques non linéaires résultant de l'interaction des impulsions lumineuses dans l'échantillon,
   - des moyens de traitement électronique (80) permettant à partir de signaux électroniques résultant de la détection synchrone d'obtenir un signal caractéristique de la résonance vibrationnelle moléculaire de l'échantillon.

2. Dispositif selon la revendication 1, dans lequel les moyens électro-optiques comprennent une source optique (20) d'émission de trains d'impulsions aux pulsations $\omega_1$, $\omega_2$ et $\omega_3$, et des moyens pour moduler en amplitude les trains d'impulsions aux pulsations $\omega_1$ et $\omega_3$ respectivement aux première et deuxième fréquences de modulation.

3. Dispositif selon la revendication 2, dans lequel les moyens électro-optiques comprennent des moyens (32, 34, 36) pour moduler en amplitude les trains d'impulsions aux pulsations $\omega_1$ et $\omega_3$ à la même fréquence de modulation mais en opposition de phase.

4. Dispositif selon la revendication 2, dans lequel les moyens électro-optiques comprennent des moyens (34, 36) pour moduler en amplitude les trains d'impulsions aux pulsations $\omega_1$ et $\omega_3$ à deux fréquences de modulations distinctes, non multiples l'une de l'autre.

**5.** Dispositif selon la revendication 1, dans lequel les première et deuxième fréquences de modulation sont identiques, et les moyens électro-optiques comprennent une source optique (20) d'émission de trains d'impulsions aux pulsations $\omega_1$, $\omega_2$ et $\omega_3$, et des moyens (38) pour moduler en amplitude le train d'impulsions à la pulsation $\omega_2$ à la fréquence de modulation.

**6.** Dispositif selon la revendication 1, dans lequel les première et deuxième fréquences de modulation sont identiques, et les moyens électro-optiques comprennent une source optique (20) d'émission de trains d'impulsions aux pulsations $\omega_1$, $\omega_2$ et $\omega_3$ et au moins une ligne à retard (58) permettant de générer entre les trains d'impulsions aux pulsations $\omega_1$ et $\omega_3$ et les trains d'impulsions à la pulsation $\omega_2$, un retard temporel modulé à la fréquence de modulation.

**7.** Dispositif selon l'une quelconque des revendications précédentes, dans lequel les moyens électro-optiques comprennent une source optique (20, 51-53) d'émission de trains d'impulsions à dérive de fréquence, centrées respectivement sur les pulsations $\omega_1$, $\omega_2$ et $\omega_3$.

**8.** Dispositif selon la revendication 7, dans lequel la source optique d'émission comprend en outre une ligne à retard permettant de générer un décalage temporel identique entre les impulsions aux pulsations $\omega_1$ et $\omega_2$ d'une part et les impulsions aux pulsations $\omega_2$ et $\omega_3$ d'autre part, de telle sorte à faire varier la fréquence de résonance vibrationnelle moléculaire de l'échantillon à laquelle le signal optique non linéaire est détecté.

**9.** Dispositif selon la revendication 7 en ce qu'elle dépend de la revendication 6, dans lequel la source optique d'émission comprend un générateur (20, 50) de trains d'impulsions à dérive de fréquence centrées sur la pulsation $\omega_2$ et une lame séparatrice dichroïque (67) permettant de séparer d'une part les impulsions centrées sur la pulsation $\omega_2$ et d'autre part les impulsions centrées respectivement sur les pulsations $\omega_1$ et $\omega_3$.

**10.** Dispositif selon l'une quelconque des revendications précédentes, **caractérisé en ce qu'**il est au moins partiellement fibré.

**11.** Procédé pour la détection d'un signal optique non linéaire résonant de type Diffusion Raman Stimulée (SRS) induit dans un échantillon comprenant :

- l'interaction dans l'échantillon, à une première fréquence de modulation, de trains d'impulsions lumineuses de pulsations $\omega_1$ et $\omega_2$ et, à une deuxième fréquence de modulation, de trains d'impulsions lumineuses de pulsations $\omega_2$ et $\omega_3$, telles que $\omega_2 - \omega_1 = \omega_3 - \omega_2 = \Omega_R$ où $\Omega_R$ est une pulsation de résonance vibrationnelle moléculaire de l'échantillon,
- la détection synchrone aux première et deuxième fréquences de modulation de signaux optiques non linéaires résultant de l'interaction des impulsions lumineuses dans l'échantillon,
- le traitement électronique permettant à partir de signaux électroniques résultant de la détection synchrone d'obtenir un signal caractéristique de la résonance vibrationnelle moléculaire de l'échantillon.

**12.** Procédé selon la revendication 11 comprenant l'émission de trains d'impulsions aux pulsations $\omega_1$, $\omega_2$ et $\omega_3$ et la modulation en amplitude des trains d'impulsions aux pulsations $\omega_1$ et $\omega_3$ respectivement aux première et deuxième fréquences de modulation.

**13.** Procédé selon la revendication 12, dans lequel les trains d'impulsions aux pulsations $\omega_1$ et $\omega_3$ sont modulés en amplitude à la même fréquence de modulation mais en opposition de phase.

**14.** Procédé selon la revendication 12, dans lequel les trains d'impulsions aux pulsations $\omega_1$ et $\omega_3$ sont modulés en amplitude à deux fréquences de modulations distinctes, non multiples l'une de l'autre.

**15.** Procédé selon la revendication 11, dans lequel les première et deuxième fréquences de modulation étant identiques, il comprend l'émission de trains d'impulsions aux pulsations $\omega_1$, $\omega_2$ et $\omega_3$ et la modulation en amplitude du train d'impulsions à la pulsation $\omega_2$ à la fréquence de modulation.

**16.** Procédé selon la revendication 11, dans lequel les première et deuxième fréquences de modulation étant identiques, il comprend l'émission de trains d'impulsions aux pulsations $\omega_1$, $\omega_2$ et $\omega_3$ et la génération entre les trains d'impulsions aux pulsations $\omega_1$ et $\omega_3$ et les trains d'impulsions à la pulsation $\omega_2$, d'un retard temporel modulé à la fréquence de modulation.

**17.** Procédé selon l'une quelconque des revendications 11 à 16, dans lequel les impulsions sont des impulsions à dérive de fréquence, centrées respectivement sur les pulsations $\omega_1$, $\omega_2$ et $\omega_3$.

**18.** Procédé selon la revendication 17, comprenant en outre la génération d'un décalage temporel identique entre les impulsions aux pulsations $\omega_1$ et $\omega_2$ d'une part et les impulsions aux pulsations $\omega_2$ et $\omega_3$ d'autre

part, de telle sorte à détecter un signal optique non linéaire caractéristique d'une autre fréquence de résonance vibrationnelle moléculaire de l'échantillon.

19. Procédé selon la revendication 17 en ce qu'elle dépend de la revendication 16, comprenant la génération de trains d'impulsions à dérive de fréquence centrées sur la pulsation $\omega_2$, la séparation des impulsions en impulsions centrées sur la pulsation $\omega_2$ d'une part et en impulsions centrées respectivement sur les pulsations $\omega_1$ et $\omega_3$ d'autre part.

**Patentansprüche**

1. Vorrichtung für die Detektion eines in einer Probe induzierten optischen nichtlinearen resonanten Signals des Typs Stimulierte Raman-Detektion (SRS), wobei die Vorrichtung Folgendes umfasst:

   - elektrooptische Mittel, um in der Probe bei einer ersten Modulationsfrequenz Folgen von Lichtimpulsen (14, 12) mit den Pulsationen $\omega_1$ und $\omega_2$ und bei einer zweiten Modulationsfrequenz Folgen von Lichtimpulsen (12, 16) mit den Pulsationen $\omega_2$ und $\omega_3$ interagieren zu lassen, so dass $\omega_2 - \omega_1 = \omega_3 - \omega_2 = \Omega R$, wobei $\Omega R$ eine Pulsation einer molekularen Vibrationsresonanz der Probe ist,
   - Mittel für die synchrone Detektion (70, 80) bei der ersten und zweiten Modulationsfrequenz optischer nichtlinearer Signale, die sich aus der Interaktion der Lichtimpulse in der Probe ergeben,
   - Mittel für die elektronische Verarbeitung (80), wodurch sich ausgehend von elektronischen Signalen aus der synchronen Detektion ein charakteristisches Signal für die molekulare Vibrationsresonanz der Probe erzielen lässt.

2. Vorrichtung nach Anspruch 1, bei der die elektrooptischen Mittel eine optische Quelle (20) für das Aussenden von Impulsfolgen mit den Pulsationen $\omega_1$, $\omega_2$ und $\omega_3$ und Mittel für die Amplitudenmodulation der Impulsfolgen mit den Pulsationen $\omega_1$ und $\omega_3$ bei der ersten bzw. zweiten Modulationsfrequenz umfassen.

3. Vorrichtung nach Anspruch 2, bei der die elektrooptischen Mittel Mittel (32, 34, 36) für die Amplitudenmodulation der Impulsfolgen mit den Pulsationen $\omega_1$ und $\omega_3$ bei derselben Modulationsfrequenz, jedoch gegenphasig umfassen.

4. Vorrichtung nach Anspruch 2, bei der die elektrooptischen Mittel Mittel (34, 36) für die Amplitudenmodulation der Impulsfolgen mit den Pulsationen $\omega_1$ und $\omega_3$ bei zwei unterschiedlichen Modulationsfrequenzen umfassen, die jeweils kein Vielfaches der anderen sind.

5. Vorrichtung nach Anspruch 1, bei der die erste und zweite Modulationsfrequenz identisch sind und die elektrooptischen Mittel eine optische Quelle (20) für das Aussenden von Impulsfolgen mit den Pulsationen $\omega_1$, $\omega_2$ und $\omega_3$ und Mittel (38) für die Amplitudenmodulation der Impulsfolgen mit der Pulsation $\omega_2$ bei der Modulationsfrequenz umfassen.

6. Vorrichtung nach Anspruch 1, bei der die erste und zweite Modulationfrequenz identisch sind und die elektrooptischen Mittel eine optische Quelle (20) für das Aussenden von Impulsfolgen mit den Pulsationen $\omega_1$, $\omega_2$ und $\omega_3$ und mindestens eine Verzögerungsleitung (58) umfassen, mit der zwischen den Impulsfolgen mit den Pulsationen $\omega_1$ und $\omega_3$ und den Impulsfolgen mit der Pulsation $\omega_2$ eine bei der Modulationsfrequenz modulierten zeitliche Verzögerung erzeugt werden kann.

7. Vorrichtung nach einem beliebigen der vorhergehenden Ansprüche, bei der die elektrooptischen Mittel eine optische Quelle (20, 51-53) für das Aussenden von Impulsfolgen mit Frequenzabweichung mit Zentrierung auf die Pulsationen $\omega_1$, $\omega_2$ bzw. $\omega_3$ umfasst.

8. Vorrichtung nach Anspruch 7, bei der die optische Sendequelle ferner eine Verzögerungsleitung umfasst, mit der zwischen den Impulsen mit den Pulsationen $\omega_1$ und $\omega_2$ einerseits und den Impulsen mit den Pulsationen $\omega_2$ und $\omega_3$ andererseits eine identische zeitliche Verzögerung erzeugt werden kann, so dass die Frequenz der molekularen Vibrationsresonanz der Probe, bei der das nichtlineare optische Signal detektiert wird, variiert werden kann.

9. Vorrichtung nach Anspruch 7, sofern von Anspruch 6 abhängig, bei der die optische Sendequelle einen Generator (20, 50) von Impulsfolgen mit Frequenzabweichung mit Zentrierung auf die Pulsation $\omega_2$ und einen dichroitischen Strahlteiler (67) umfasst, durch den die Impulse mit Zentrierung auf die Pulsation $\omega_2$ einerseits und die Impulse mit Zentrierung auf die Pulsationen $\omega_1$ bzw. $\omega_3$ andererseits getrennt werden können.

10. Vorrichtung nach einem beliebigen der vorhergehenden Ansprüche, **dadurch gekennzeichnet, dass** sie mindestens teilweise gefasert ist.

11. Verfahren für die Detektion eines in einer Probe induzierten optischen nichtlinearen resonanten Signals des Typs Stimulierte Raman-Detektion (SRS), umfassend:

- die Interaktion von Folgen von Lichtimpulsen mit den Pulsationen $\omega_1$ und $\omega_2$ bei einer ersten Modulationsfrequenz und Folgen von Lichtimpulsen mit den Pulsationen $\omega_2$ und $\omega_3$ bei einer zweiten Modulationsfrequenz in der Probe, so dass $\omega_2 - \omega_1 = \omega_3 - \omega_2 = \Omega R$, wobei $\Omega R$ eine Pulsation einer molekularen Vibrationsresonanz der Probe ist,
- die synchrone Detektion bei der ersten und zweiten Modulationsfrequenz optischer nichtlinearer Signale, die sich aus der Interaktion der Lichtimpulse in der Probe ergeben,
- die elektronische Verarbeitung, wodurch sich ausgehend von elektronischen Signalen aus der synchronen Detektion ein charakteristisches Signal für die molekulare Vibrationsresonanz der Probe erzielen lässt.

12. Verfahren nach Anspruch 11, umfassend das Aussenden von Impulsfolgen mit den Pulsationen $\omega_1$, $\omega_2$ und $\omega_3$ und die Amplitudenmodulation der Impulsfolgen mit den Pulsationen $\omega_1$ und $\omega_3$ bei der ersten bzw. zweiten Modulationsfrequenz.

13. Verfahren nach Anspruch 12, bei dem die Impulsfolgen mit den Pulsationen $\omega_1$ und $\omega_3$ bei derselben Modulationsfrequenz, jedoch gegenphasig amplitudenmoduliert werden.

14. Verfahren nach Anspruch 12, bei dem die Impulsfolgen mit den Pulsationen $\omega_1$ und $\omega_3$ bei zwei unterschiedlichen Modulationsfrequenzen amplitudenmoduliert werden, die jeweils kein Vielfaches der anderen sind.

15. Verfahren nach Anspruch 11, das bei identischer erster und zweiter Modulationfrequenz das Aussenden von Impulsfolgen mit den Pulsationen $\omega_1$, $\omega_2$ und $\omega_3$ und die Amplitudenmodulation der Impulsfolge mit der Pulsation $\omega_2$ bei der Modulationsfrequenz umfasst.

16. Verfahren nach Anspruch 11, das bei identischer erster und zweiter Modulationfrequenz das Aussenden von Impulsfolgen mit den Pulsationen $\omega_1$, $\omega_2$ und $\omega_3$ und das Erzeugen einer bei der Modulationsfrequenz modulierten zeitlichen Verzögerung zwischen den Impulsfolgen mit den Pulsationen $\omega_1$ und $\omega_3$ und den Impulsfolgen mit der Pulsation $\omega_2$ umfasst.

17. Verfahren nach einem beliebigen der vorhergehenden Ansprüche 11 bis 16, bei dem es sich bei den Impulsen um Impulse mit Frequenzabweichung mit Zentrierung auf die Pulsationen $\omega_1$, $\omega_2$ bzw. $\omega_3$ handelt.

18. Verfahren nach Anspruch 17, umfassend ferner das Erzeugen einer identischen zeitlichen Verzögerung zwischen den Impulsen mit den Pulsationen $\omega_1$ und $\omega_2$ einerseits und den Impulsen mit den Pulsationen $\omega_2$ und $\omega_3$ andererseits, so dass ein optisches nichtlineares Signal detektiert wird, das für die molekulare Vibrationsresonanz der Probe charakteristisch ist.

19. Verfahren nach Anspruch 17, sofern von Anspruch 16 abhängig, umfassend das Erzeugen von Impulsfolgen mit Frequenzabweichung mit Zentrierung auf die Pulsation $\omega_2$, die Trennung der Impulse mit Zentrierung auf die Pulsation $\omega_2$ einerseits und der Impulse mit Zentrierung auf die Pulsationen $\omega_1$ bzw. $\omega_3$ andererseits.

**Claims**

1. A device for detecting a resonant non-linear optical signal of Stimulated Raman Scattering (SRS) type induced in a sample, the device comprising:

   - electro-optical means for making interact in the sample, at a first modulation frequency, trains of light pulses (14, 12) of angular frequencies $\omega_1$ and $\omega_2$ and, at a second modulation frequency, trains of light pulses (12, 16) of angular frequencies $\omega_2$ and $\omega_3$, such that $\omega_2 - \omega_1 = \omega_3 - \omega_2 = \Omega_R$ where $\Omega_R$ is a molecular vibrational resonant angular frequency of the sample;
   - means for synchronous detection (70, 80) at the first and second modulation frequencies of non-linear optical signals resulting from the interaction of the light pulses in the sample;
   - electronic processing means (80) making it possible to obtain, from electronic signals resulting from the synchronous detection, a signal characterizing the molecular vibrational resonance of the sample.

2. The device according to claim 1, in which the electro-optical means comprise an optical source (20) for emitting trains of pulses at the angular frequencies $\omega_1$, $\omega_2$ and $\omega_3$, and means for amplitude modulating the trains of pulses at the angular frequencies $\omega_1$ and $\omega_3$, respectively, at the first and second modulation frequencies.

3. The device according to claim 2, in which the electro-optical means comprise means (32, 34, 36) for amplitude modulating the trains of pulses at the angular frequencies $\omega_1$ and $\omega_3$ at the same modulation frequency but in phase opposition.

4. The device according to claim 2, in which the electro-optical means comprise means (34, 36) for amplitude modulating the trains of pulses at the angular frequencies $\omega_1$ and $\omega_3$ at two separate modulation frequencies that are not multiples of each other.

5. The device according to claim 1, in which the first and second modulation frequencies are identical, and the electro-optical means comprise an optical source (20) for emitting trains of pulses at the angular frequencies $\omega_1$, $\omega_2$ and $\omega_3$, and means (38) for amplitude modulating the train of pulses at the angular frequency $\omega_2$ at the modulation frequency.

6. The device according to claim 1, in which the first and second modulation frequencies are identical, and the electro-optical means comprise an optical source (20) for emitting trains of pulses at the angular frequencies $\omega_1$, $\omega_2$ and $\omega_3$, and at least one delay line (58) making it possible to generate a time delay modulated at the modulation frequency between the trains of pulses at the angular frequencies $\omega_1$ and $\omega_3$ and the trains of pulses at the angular frequency $\omega_2$.

7. The device accordingly to any one of the previous claims, in which the electro-optical means comprise an optical source (20, 51-53) for emitting trains of frequency chirped pulses centered respectively on the angular frequencies $\omega_1$, $\omega_2$ and $\omega_3$.

8. The device according to claim 7, in which the emitting optical source furthermore comprises a delay line allowing an identical time shift to be generated between the pulses at the angular frequencies $\omega_1$ and $\omega_2$, on the one hand, and the pulses at the angular frequencies $\omega_2$ and $\omega_3$, on the other hand, in such a way as to vary the molecular vibrational resonant frequency of the sample at which the non-linear optical signal is detected.

9. The device according to claim 7 in that it depends on claim 6, in which the emitting optical source comprises a generator (20, 50) of trains of frequency chirped pulses centered on the angular frequency $\omega2$ and a dichroic beam splitter (67) making it possible to separate pulses centered on the angular frequency $\omega2$, on the one hand, and pulses centered on the angular frequencies $\omega_1$ and $\omega_3$, respectively, on the other hand.

10. The device according to any one of the previous claims, **characterized in that** it is at least partially fibered.

11. A method for detecting a resonant non-linear optical signal of Stimulated Raman Scattering (SRS) type induced in a sample, comprising:

   - interacting in the sample, at a first modulation frequency, trains of light pulses of angular frequencies $\omega_1$ and $\omega_2$ and, at a second modulation frequency, trains of light pulses of angular frequencies $\omega_2$ and $\omega_3$, such that $\omega_2 - \omega_1 = \omega_3 - \omega_2 = \Omega_R$ where $\Omega_R$ is a molecular vibrational resonant angular frequency of the sample;
   - synchronous detection at the first and second modulation frequencies of non-linear optical signals resulting from the interaction of the light pulses in the sample;
   - electronic processing making it possible to obtain, from electronic signals resulting from the synchronous detection, a signal characterizing the molecular vibrational resonance of the sample.

12. The method according to claim 11 comprising the emission of trains of pulses at the angular frequencies $\omega_1$, $\omega_2$ and $\omega_3$ and the amplitude modulation of the trains of pulses at the angular frequencies $\omega_1$ and $\omega_3$ at the first and second modulation frequencies, respectively.

13. The method according to claim 12, in which the trains of pulses at the angular frequencies $\omega_1$ and $\omega_3$ are amplitude modulated at the same modulation frequency but in phase opposition.

14. The method according to claim 12, in which the trains of pulses at the angular frequencies $\omega_1$ and $\omega_3$ are amplitude modulated at two separate modulation frequencies that are not multiples of each other.

15. The method according to claim 11, in which, the first and second modulation frequencies being identical, it comprises emitting trains of pulses at the angular frequencies $\omega_1$, $\omega_2$ and $\omega_3$, and amplitude modulating the trains of pulses at the angular frequency $\omega_2$ at the modulation frequency.

16. The method according to claim 11, in which the first and second modulation frequencies being identical, the method comprises emitting trains of pulses at the angular frequencies $\omega_1$, $\omega_2$ and $\omega_3$, and generating a time delay modulated at the modulation frequency between the trains of pulses at the angular frequencies $\omega_1$ and $\omega_3$ and the trains of pulses at the angular frequency $\omega_2$.

17. The method according to any one of claims 11 to 16, in which the pulses are frequency chirped pulses centered respectively on the angular frequencies $\omega_1$, $\omega_2$ and $\omega_3$.

18. The method according to claim 17, furthermore comprising generating an identical time shift between the pulses at the angular frequencies $\omega_1$ and $\omega_2$, on the one hand, and the pulses at the angular frequencies $\omega_2$ and $\omega_3$, on the other hand, in such a way as to detect a non-linear optical signal characterizing another molecular vibrational resonant frequency of the sample.

19. The method according to claim 17, in that it depends on claim 16, comprising generating trains of frequency chirped pulses centered on the angular frequency $\omega_2$, and separating the pulses into pulses centered on the angular frequency $\omega_2$, on the one hand, and pulses centered on the angular frequencies $\omega_1$ and $\omega_3$, respectively, on the other hand.

$$\omega_P - \omega_S = \Omega_R$$

## FIG.1A

ART ANTERIEUR

ENTREE
Stokes Pompe

Transfert
d'énergie

SORTIE
Stokes Pompe

$\Delta I_{SRG}$

$\Delta I_{SRL}$

$\Omega_R$

$\omega_S$   $\omega_P$   $\omega$

$\Omega_R$   $\Omega_R$

$\omega_S$   $\omega_P$   $\omega_{AS}$   $\omega$

## FIG.1B

FIG.2

ART ANTERIEUR

Fingerprints Amides        Lipides-protéines

$\Omega$ (cm$^{-1}$)

**FIG.3A**

Région des lipides-protéines
×1

Intensité(u.a)

202
203
201
203
202

27503050    2900

$\Omega$ (cm$^{-1}$)

**FIG.3B**

Région des amides
×8

Intensité(u.a)

212
211    213

1350    1500    1750

$\Omega$ (cm$^{-1}$)

**FIG.3C**

Région des "Fingerprints"
×28

Intensité(u.a)

222
223
221

850    1000

$\Omega$ (cm$^{-1}$)

**FIG.3D**

EP 2 979 080 B1

FIG.4

FIG.5A

FIG.5B

FIG.5C

FIG.6

EP 2 979 080 B1

FIG.7A

FIG.7C

FIG.7B

FIG.7D

EP 2 979 080 B1

412
413
411
410

FIG.8B

45
40
35
30
25
20
15
10
5
0
-5

Signal (µV)

503

501

502

960    1000    1040    1080    1120

Décalage Raman (cm⁻¹)

FIG.8A

511  512  513  514

SRG  SRL (180°)  SRGOLD  Ref

521  522  523  524

SRG  SRL (180°)  SRGOLD  Ref

160
140
120
100
80
60
40
20
0
-20

Signal (µV)

Résonance (Ω=1003 cm⁻¹)     Hors Résonance (Ω=930 cm⁻¹)

FIG.8C

EP 2 979 080 B1

FIG.9A

**Pupille de l'objectif de collection**

Sans diffusion

Avec diffusion

FIG.9B

EP 2 979 080 B1

FIG.9C — Résonance (1003 cm⁻¹)

FIG.9D — Hors Résonance (930 cm⁻¹)

EP 2 979 080 B1

## Spectre Raman du polystyrène

FIG.9E

$\Omega=1034\ cm^{-1}$

$\Omega=1041\ cm^{-1}$

551 552 553 554

SRG SROL SRGOLD Laser

Signal (µV)

20 µm

561 562 563 564

FIG.9F

Image en lumière blanche

10 µm

FIG.10A

FIG.10B

EP 2 979 080 B1

FIG.10C

FIG.11A

FIG.11B

EP 2 979 080 B1

FIG.12A

701 SRL
Stokes pompe

$\Omega$

$\omega_1$ $\omega_2$ $\omega_3$

702 SRG
Stokes pompe

$\Omega$

$\omega_1$ $\omega_2$ $\omega_3$

Signal/ Idler

710

712

Modulation Laser

f

720

722

f

SRS

$\Delta I_{SRL}$

714

$\Delta I_{SRG}$

724

ARTEFACTS

$\Delta I_{artefacts}$

716

$\Delta I_{artefacts}$

726

$\Delta I(A) = -\Delta I_{SRL} + \Delta I_{artefacts}$

$\Delta I(B) = \Delta I_{SRG} + \Delta I_{artefacts}$

FIG.12B

FIG.13

EP 2 979 080 B1

FIG.14A

FIG.14B

FIG.14C

FIG.15

FIG.16A

FIG.16B

FIG.17A

FIG.17B

FIG.17C

FIG.18A

FIG.18B

FIG.18C

FIG.19A

FIG.19B

FIG.19C

EP 2 979 080 B1

FIG.20

Etat *a*:

FIG.21A

Etat *b*:

FIG.21B

FIG.21C

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2211219 A

**Littérature non-brevet citée dans la description**

- **N. BLOEMBERGEN.** The stimulated raman effect. *American Journal of Physics,* 1967, vol. 35, 989-1023
- **PLOETZ et al.** Femtosecond Stimulated Raman Microscopy. *Applied Physics B,* 2007, vol. 87 (3), 389-393
- **C.W. FREUDIGER et al.** Label-free biomedical imaging with high sensitivity by stimulated Raman scattering microscopy. *Science,* 2008, vol. 322 (5909), 1857-1861
- **P. NANDAKUMAR et al.** Vibrational imaging based on stimulated raman scattering microscopy. *New Journal of Physics,* 2009, vol. 11 (3), 033026
- **Y. OZEKI et al.** Analysis and experimental assessment of the sensitivity of stimulated Raman scattering microscopy. *Optics Express,* Mars 2009, vol. 17 (5), 3651-3658
- **HUANG et al.** *Optics Express,* 2011, vol. 19, 23